# EUROPEAN PATENT APPLICATION

(11) **EP 2 551 017 A2**
(43) Date of publication of application: **30.01.2013**
(21) Application number: 12178153.8
(22) Date of filing: 27.07.2012
(51) Int. Cl.: B03C 3/41, B03C 3/47, B03C 3/36, B03C 3/10, B03C 3/82

(54) **Gas purification system**

(30) Priority: 29.07.2011 NL 2007200; 09.11.2011 NL 2007755; 11.04.2012 NL 2008621
(71) Applicant: Technische Universiteit Delft, 2628 CN Delft (NL)
(72) Inventor: Ursem, Willibrordus Nicolaas Johannes, 2600 AA Delft (NL); Marijnissen, Johannes Cornelis Maria, 2600 AA Delft (NL); Van de Vorle - Houben, Elizabeth Johanna Jacoba, 5438 AP Gassel (NL)
(74) Representative: Ellens, Andries

(57) **Abstract**

The invention provides a gas purification system (10) for agricultural application comprising an elongated gas channel (100) having a rectangular cross-section, a channel height (h1), and a longitudinal axis (1); a gas transport unit (200); and a corona discharge system (300), comprising a counter electrode (340) within the elongated gas channel (100), a corona discharge wire (310) within the elongated gas channel (300), and a voltage generator configured to apply a DC voltage of at least 10 kV to the corona discharge wire (310).

## Description

### Field of the invention

The invention relates to a gas purification system, to an accommodation equipped with such gas purification system, to the use of the purification system, and to a method for purifying gas, especially air, from an accommodation with the use of such gas purification system.

### Background of the invention

Cattle breeding and the production of animal waste go together. The generation of waste, solid, liquid and gaseous, becomes an increasing problem. In the art, several solutions are suggested.

US2002020677 for instance describes an integrated farm animal waste treatment system for treating solid and liquid farm animal wastes while recovering waste heat energy generated during the treatment process. The preferred embodiment includes a portable chemical treatment process that can be moved from one waste processing site to another in order to treat a variety of different types of animal waste in varying amounts on a batch basis. The preferred embodiment provides for the destruction of hazardous solids, liquids and gases. In addition, the process includes means to isolate and recover valuable by-products of farm animal waste, such as nitrogen and ammonia, for use in manufacturing commercial-grade fertilizer. The preferred embodiment also includes means for capturing waste heat for use either internally in the waste treatment process itself or, alternatively as a source of heat for the farm creating the animal wastes. The same basic process, but with additional, more permanent features, can be installed and operated on either a batch or continuous basis as a permanent installation, depending on the need within a particular farming community.

In US6863826 it is described that animal waste such as faecal material from swine, chicken, turkey, and cattle is converted into useful forms such as fertilizer, other types of soil builders, and even nutrient feed additives. Devices, systems, and methods are provided that allow economical conversion and in many instances, alleviate the production and release of undesirable gases such as sulphide and ammonia. In one embodiment, undesirable anaerobic and facultative anaerobic bacteria are killed at a greater rate than desirable soil compatible aerobic bacteria. The use of low temperature killing diminishes off gassing commonly associated with other techniques, and the use of gas trapping additives such as zeolites provides enhanced soil building qualities such as slow release of nitrogen and slow release of moisture to soil. The methods allow convenient adjustment of composition, allowing conversion of waste into tailored designer fertilizer suited for particular soils. Other embodiments provide other soil building qualities as well as nutrient qualities for feedstock used in animal husbandry such as aquaculture.

US4218233 describes a method for reducing offensive odours in poultry houses comprising adding at least 10 pounds of composted cow manure per ton of poultry manure. The method is ascribed to substantially reduce offensive odour in poultry houses especially ammonia odour and thereby provides a healthier environment for poultry and poultry workers. Since the ammonia loss to the environment is reduced, the nitrogen is retained in the poultry manure providing a product with higher nitrogen content.

US2004120845 describes a method and apparatus for neutralizing airborne pathogens in ventilated air, and in heating or air conditioning systems. The pathogen neutralization system is assumed to be effective against a wide spectrum of pathogens, to incorporate commercially available components, and to be readily integrated into commercial HVAC systems where it neutralizes airborne pathogens in large volumes of ventilated air in real time without any chemical reagents. Typically, the system has a flow-through reaction chamber that contains a UV light source that emits short intense flashes of broad-spectrum UV light, a source of water vapour or spray, and an ozone generator. The system is assumed to generate highly reactive ozone intermediates by irradiating ozone gas with UV light in the presence of water droplets or water vapour. According to US2004120845, the pathogens that can be neutralized by this system include bacteria, viruses, spores, fungi and parasites.

W02011010918 describes a method for the removal of a gaseous fluid comprising (a) applying an electric field between a corona discharge wire arranged to generate a corona discharge and a second electrode, comprising a haze-permeable electrically conductive sieve of a plurality of conductive strands, (b) atomizing a liquid to providing a liquid haze between the first and the second electrode, wherein the liquid is a solvent for the gaseous fluid, and (c) arranging a substrate behind, relative to the corona discharge wire, the second electrode.

### Summary of the invention

There is a need for good and efficient systems that may remove for instance fine dust and/or germs from gas, especially from air. Prior art systems, such as described above, may not perform sufficiently and/or may further be optimized and/or may be simplified. Therefore, it is an aspect of the invention to provide an alternative gas purification system and method for purifying air, especially for agricultural applications, which preferably further at least partly obviate one or more of above-described drawbacks.

Hence, in a first aspect the invention provides a gas purification system (herein also indicated as "system" or "apparatus")) comprising a corona discharge system, the corona discharge system comprising (a) a corona discharge wire ("corona discharge wire" or "first electrode"), and (b) a counter electrode ("second electrode"). The gas purification system may further comprise (c) a voltage generator configured to apply a DC voltage of preferably at least 5 kV, especially at least 10 kV, to the corona discharge wire. The voltage generator is especially configured to generate a corona discharge at the corona discharge wire. The corona discharge wire is especially a wire. This wire is herein further also indicated as "corona discharge wire". The corona discharge wire may especially have a thickness in the range of 0.05-10 mm.

Therefore, the invention especially provides in an embodiment, a gas purification system comprising a corona discharge system, the corona discharge system comprising (a) a corona discharge wire, (b) a counter electrode; and (c) a voltage generator configured to apply a DC voltage of at least 10 kV to the corona discharge wire. The invention especially further provides in an embodiment, a gas purification system comprising a corona discharge system, the corona discharge system comprising (a) a corona discharge wire, (b) a counter electrode; and (c) a voltage generator configured to generate a corona discharge at the corona discharge wire.

The corona discharge wire is used as electrode (herein also indicated as "corona discharge wire"), to which a potential is applied, preferably at least a voltage of 10 kV (i.e. during use, this electrode is positively charged with a voltage of e.g. at least 10 kV). It appears that with such configuration, gas comprising particles between the corona discharge wire and counter electrode, or even some distance away from the corona discharge wire and counter electrode (and not between these electrodes, such as over a set of corona discharge wire and counter electrode), may be purified from particles. It also surprisingly appears that with the present invention, dimensional freedom is larger than with pure needles, which dimensional freedom may for instance be of relevance when applying the corona discharge system within a channel. Not only are the purification results better, also the energy consumption is lower.

Especially good results may be obtained with a gas purification system comprising a corona discharge system, said corona discharge system comprising a corona discharge wire, especially having a thickness in the range of 0.05-10 mm, a counter electrode, which is preferably earthed, wherein the counter electrode preferably comprises (or is) an electrical conductive plate (which may e.g. flat or curved), and a voltage generator configured to apply a DC voltage of at least 10 kV to the corona discharge wire, and (also) configured to generate a corona discharge at the corona discharge wire, wherein the corona discharge wire is configured parallel to the counter electrode, wherein in a preferred embodiment the corona discharge wire has a second distance to the counter electrode in the range of 3.5-125 cm, especially 5-50 cm, and yet even more especially 7.5-35 cm, such as especially 10-30 cm (100-300 mm). It appears that at smaller distances or larger distances, the efficiency reduces. The first electrode (corona discharge wire) may be configured within an (elongated) channel); the second electrode (the counter electrode) may also be configured within this elongated channel and/or at least part of the channel wall may be configured as counter electrode.

Optionally a gas transport unit may be applied to transport gas (comprising smut or fine dust or other undesired particles) through the gas purification system. As the gas purification system does not necessarily comprise a gas channel (see below), the phrase "transporting gas through the gas purification system" and similar phrases, may also refer to "leading gas over or along the set of first electrode and counter electrode. As the counter electrode may especially be a plate, the gas may be led over the counter electrode at the side (first face) where the first electrode is configured.

In a specific embodiment, the gas purification system does comprise an elongated gas channel, the elongated gas channel comprising (especially enclosing) the counter electrode and the corona discharge wire, the gas purification system further (optionally) comprising a gas transport unit, configured to transport gas through the elongated gas channel. An advantage of such system may for instance also be the relative ease with which gas flow and optionally gas circulation, may controlled.

In a specific embodiment, the elongated gas channel, has a first face, a second face opposite of the first face, edges, wherein the elongated gas channel further has (preferably) a rectangular cross-section, a channel height (h1), and a longitudinal axis; wherein the counter electrode within the elongated gas channel has a counter electrode distance (d3) to the first face, with in an embodiment ½h1<d3≤h1; wherein the corona discharge wire within the elongated gas channel has a first distance (d1) to the first face and a second distance (d2), with in an embodiment ½h1<d1<h1 and with in an embodiment d1/d2>1, wherein the corona discharge wire is preferably configured parallel to the edges. The fact that the corona discharge wire may be arranged parallel to the edges may especially indicate that the plane of the corona discharge wires is parallel to the edges. In an embodiment, the cross section (of the elongated gas channel) is square. In yet another embodiment, the cross-section (of the elongated gas channel) is rectangular, but non-square.

In a specific embodiment, the distances from the corona discharge wire to each of the first face and the edges are larger than the second distance (d2) from the corona discharge wire to the counter electrode. Especially such asymmetric configuration may provide the advantages of the invention, although a symmetric arrangement may in an embodiment also be applied.

Hence, in an embodiment, the invention also provides a gas purification system comprising: (a) an elongated gas channel, having a first face, a second face opposite of the first face, edges, wherein the elongated gas channel further has a, preferably rectangular, cross-section, a channel height (h1), and a longitudinal axis; (b) optionally a gas transport unit, configured to transport gas through the elongated gas channel; (c) a corona discharge system comprising: (c.i) a counter electrode within the elongated gas channel, having a counter electrode distance (d3) to the first face (with preferably ½h1<d3≤h1); (c.ii) a corona discharge wire within the elongated gas channel, having a first distance (d1) to the first face and a second distance (d2) to the counter electrode (with preferably ½h1<d1<h1 and preferably d1/d2>1), wherein the corona discharge wire is preferably configured parallel to the edges; wherein in a preferred embodiment d2<d1 and d2<11, with 11 being the distance between the corona discharge electrode and the (nearest) edge; and (c.iii) optionally a voltage generator configured to apply a DC voltage of preferably at least 10 kV to the corona discharge wire, and especially configured to apply preferably a positive charge to the corona discharge wire (during use of the system). Especially, the distances from the corona discharge wire to each of the first face and the edges are larger than the second distance to the counter electrode. This configuration appears to especially advantageous results in removing undesired particles from gasses.

Especially however, when seen from the first face in a direction of the second face, the counter electrode and the corona discharge wire are preferably beyond the first half of the gas channel, i.e. in general these will be situated in the lower half of the elongated gas channel. Hence, the counter electrode distance d3 to the first face is preferably ½h1<d3≤h1, with h1 being the height of the elongated gas channel (i.e. the distance between the first face and the second face). Likewise, the first distance d1 of the corona discharge wire to the first face is preferably ½h1<d1<h1. An asymmetric arrangement of the corona discharge wire (and the counter electrode) may add to the effect of the purification method, although a symmetric arrangement may in an embodiment also be applied.

Of course the corona discharge wire and the counter electrode are not in (direct) contact. Their distance to each other is preferably defined as d1/d2>1, with d2 being the second distance of the corona discharge wire to the counter electrode. The corona discharge wire is configured parallel to the first face (and the second face and the edge faces, i.e. parallel to the longitudinal axis). However, in an embodiment, d1/d2 is in the range of 0.8-1.2. In an embodiment, an isolator, such as a bushing, is configured between the corona discharge wire and the counter electrode. Herein, isolators or insulators are in general configured to support and separate electrical conductors without allowing current through themselves.

Especially, the invention provides a gas purification system (herein also indicated as "system" or "apparatus"), especially for agricultural application, the gas purification system comprising: (a) an elongated gas channel (herein also indicated as "gas channel" or "channel"), having a first face, a second face opposite of the first face, edges (wherein the first face, the second face and the edges enclose the channel), wherein the elongated gas channel further has a, preferably rectangular, cross-section (herein sometimes also indicated as "cross-section"), a channel height (h1), and a longitudinal axis; (b) optionally a gas transport unit, configured to transport gas through the elongated gas channel; (c) a corona discharge system comprising: (c.i) a counter electrode within the elongated gas channel, having a counter electrode distance (d3) to the first face, with preferably ½h1<d3≤h1; (c.ii) a corona discharge wire (herein sometimes also indicated as "corona discharge wire") within the elongated gas channel, having a first distance (d1) to the first face and a second distance (d2) to the counter electrode, with preferably ½h1<d1<h1 and preferably d1/d2>1, wherein the corona discharge wire is preferably configured parallel to the first face, the second face, and the edges; and (c.iii) a voltage generator configured to apply a DC voltage of preferably at least 10 kV to the corona discharge wire, and especially configured to apply a positive charge to the corona discharge wire.

In yet a further aspect, the invention provides a method for purifying air comprising leading air through the gas purification system as defined herein, while applying a DC voltage of at least 10 kV to the corona discharge wire ("first electrode"). Especially, the invention provides a method for purifying a gas, especially air, from an accommodation, wherein the accommodation may for instance be selected from the group consisting of a shed, a stable, a sty, a fold and a poultry farm, wherein the method comprises leading gas from the accommodation through the gas purification system as defined herein, while preferably applying a DC voltage of at least 10 kV to the corona discharge wire, with the corona discharge wire preferably being the positive electrode, and the counter electrode preferably being earthed. However, the method may also be applied for purifying a gas, especially air, from other accommodations that mentioned above. As indicated above, in some embodiment "leading gas through the gas purification system" may also include leading gas over or along the set of counter electrode and first electrode, especially, when assuming a plate like counter electrode, at the side of the counter electrode where the first electrode or corona discharge wire is configured.

It appears that especially with the indicate dimensions, an electric field is created that may lead the particles to the counter electrode, especially when the discharge wire is configured as positive (during use) electrode. Hence, the voltage source may especially be arranged to generate (during use) a positive charge at the corona discharge wire. In yet a further embodiment, the counter electrode is earthed (grounded). Especially, the discharge wire is configured as positive electrode, the voltage source may especially be arranged to generate a positive charge (during use) at the corona discharge wire, and the counter electrode is earthed. Preferably, a static electric field is applied (see also below).

The invention uses the principle the fact that the electrode(s) create a kind of an "electric wind" and an electric charging of the particles in the air, which will be directed by the "electric wind" due to the electric field between the corona discharge wire (corona discharge wire) and the counter electrode (second electrode). The charged particles may be guided in the direction of the second electrode and deposit. In this way, gas, such as air, can be purified.

The above preferred relations indicate an asymmetric arrangement of the corona discharge wire, with distances to the counter electrode being shorter than distances to any other conductive or earthed surface. However, in another embodiment, the corona discharge wire may also be arranged alternatively. For instance, as already indicated above, in an embodiment d1/d2 may be in the range of 0.8-1.2

Herein the term elongated gas channel may especially refer to embodiments wherein the length (longitudinal length) is larger than the width and height of the elongated gas channel. Therefore, the longitudinal axis will be longer than the centre lines (defining width and height) perpendicular to the longitudinal axis.

In general, to make use of gravity, the gas purification system is arranged - during use - such that the second face is the lower face, and the first face is above the second face. Hence, "opposite of the first face" may also indicate below the first face. In general, the first and the second face will be arranged horizontally. Hence, the first face may be the upper face or top face, and the second face may be the lower face or the bottom face. As indicated above, preferably, the cross-section (of the elongated gas channel) is rectangular. In an embodiment this may include square. The term "cross-section" herein especially refers to the cross-section of the elongated gas channel perpendicular to the longitudinal axis.

In yet a further embodiment, the corona discharge wire is arranged between two (or more) counter electrodes. The distance from the corona discharge wire to the respective counter electrodes may be the same for each counter electrode, but may optionally also differ.

Hence, in a specific embodiment, the gas purification system comprises an elongated gas channel, the elongated gas channel comprising (especially enclosing) two or more counter electrodes and the corona discharge wire (especially arranged between the two or more counter electrodes), the gas purification system further optionally comprising a gas transport unit, configured to transport gas through the elongated gas channel. In an embodiment, two or more walls comprise the two or more counter electrodes, respectively.

Such gas purification system (but also other gas purification systems described herein) may be integrated into an existing gas channel or may be connected to an existing gas channel, for instance end of pipe.

In a specific embodiment, the elongated gas channel, has a first face, a second face opposite of the first face, edges, wherein the elongated gas channel further has (preferably) a rectangular cross-section, a channel height (h1), and a longitudinal axis; wherein the corona discharge wire within the elongated gas channel has a second distance (d2), to the second counter electrode. The corona discharge wire may in an embodiment be configured parallel to the edges. The fact that the corona discharge wire may be arranged parallel to the edges may especially indicate that the plane of the corona discharge wires is parallel to the edges. However, in zigzag arrangements and the like of corona discharge wires, this may not be the case. In an embodiment, the cross section (of the elongated gas channel) is rectangular or square.

As the gas channel preferably has a rectangular cross-section, the first and the second faces (of the gas channel) are parallel to each other; the edges (or (their) edge faces) are parallel to each other and perpendicular to the first and the second faces. All of those faces are preferably configured parallel to the longitudinal axis. However, the gas channel may also have other types of cross-sections, such as round, triangular, hexagonal, etc., and optionally polygonal (other than the already indicated triangular, square, rectangular, and hexagonal). The gas channel may enclose one or more corona discharge wires, and the channel wall comprising e.g. earthed parts or the channel wall being earthed.

The gas transport unit is preferably present, although the gas purification system may also be part of a channel through which by natural pull gas flows in a direction from an inlet (or entrance) of the gas channel to an outlet (or exhaust) of the gas channel. However, in general the gas transport unit will be present (when applying a (elongated) gas channel). The term "gas transport unit" may also relate to a plurality of such units. The gas transport unit may comprise a pump, a ventilator, a blower, etc., or in principle any other means known in the art to generate a gas flow in a channel. Different types of gas transport unit may be applied to lead (flow) the gas (to be purified) through the elongated gas channel. The gas transport unit may be configured to blow or to suck the gas through the gas channel.

The corona discharge wire(s) may be (electrically) isolated from the elongated gas discharge channel, especially the first face, below which the corona discharge wire(s) may be positioned. Also in other configuration, the corona discharge wire(s) may be arranged in electrical isolation from the element it is connected to. This may for instance be the wall of a gas channel.

To this end, insulators may be applied. The corona discharge wire may therefore be arranged between insulators, such as bushings, (see also above). Especially, the isolator, such as a bushing, may essentially consist of Teflon (PTFE), or a material with similar insulating properties. For instance, also polyoxymethylene (POM) or other materials may be applied. Herein, insulators are electrical insulators, which are herein also indicated as "isolators" (see also above).

In a specific embodiment, the distances from the corona discharge wire to each of the first face and the edges are larger than the second distance (d2) from the corona discharge wire to the counter electrode. Especially such asymmetric configuration may provide the advantages of the invention. Hence, in an embodiment, the invention also provides a gas purification system comprising: (a) an elongated gas channel, having a first face, a second face opposite of the first face, edges, wherein the elongated gas channel further has a, preferably rectangular, cross-section, a channel height (h1), and a longitudinal axis; (b) optionally a gas transport unit, configured to transport gas through the elongated gas channel; (c) a corona discharge system comprising: (c.i) a counter electrode within the elongated gas channel, having a counter electrode distance (d3) to the first face (with preferably ½h1<d3≤h1); (c.ii) a corona discharge wire within the elongated gas channel, having a first distance (d1) to the first face and a second distance (d2) to the counter electrode (with preferably ½h1<d1<h1 and preferably d1/d2>1), wherein the corona discharge wire is preferably configured parallel to the first face, the second face, and the edges; wherein d2<d1 and d2<11, with 11 being the distance between the corona discharge electrode and the (nearest) edge; and (c.iii) a voltage generator configured to apply a DC voltage of preferably at least 10 kV to the corona discharge wire, and especially configured to apply a positive charge to the corona discharge wire. Likewise, the invention provides a corresponding method.

Especially however, when seen from the first face in a direction of the second face, the counter electrode and the corona discharge wire are preferably beyond the first half of the gas, i.e. in general these will be situated in the lower half of the elongated gas channel. Hence, the counter electrode distance d3 to the first face is preferably ½h1<d3≤h1, with h1 being the height of the elongated gas channel (i.e. the distance between the first face and the second face). Likewise, the first distance d1 of the corona discharge wire to the first face 101 is preferably ½h1<d1<h1. An asymmetric arrangement of the corona discharge wire (and the counter electrode) adds to the effect of the purification method.

Of course the discharge wire and the counter electrode are not in contact. Their distance to each other is preferably defined as d1/d2>1, with d2 being the second distance of the corona discharge wire to the counter electrode. The corona discharge wire is configured parallel to the first face (and the second face and the edge faces, i.e. parallel to the longitudinal axis).

Herein, the term "parallel" and similar terms may especially indicate that an angle with one or more of those faces (or longitudinal axis) is equal to or less than 2°, and especially substantially 0° with one or more of those faces (or longitudinal axis).

In a specific embodiment of the gas purification system, the corona discharge wire comprises a plurality of corona discharge wires, and at least a subset of the corona discharge wires are configured parallel to the counter electrode and optionally parallel to each other (see also below), wherein the counter electrode comprises in an embodiment an electrical conductive plate. As further elucidated below, the plate like counter electrode may have a counter electrode first face, a counter electrode second face and a counter electrode edge.

Even more especially, the corona discharge wire comprises a plurality of corona discharge wires, and at least a subset of the corona discharge wires are configured parallel to the counter electrode and are configured in a zigzag configuration (see also below), wherein said subset of the corona discharge wires forms a single conductor, and wherein the counter electrode comprises in an embodiment an electrical conductive plate. For instance, 2-16 corona discharge wires might be applied, consisting of one or more subsets. The distance between the corona discharge wires and the counter electrode may in an embodiment be bridged by insulators, such as bushings (see also below).

The corona discharge wire may be configured at the first face (with a non-zero distance, for instance bridged by one or more insulators). However, in an embodiment at both sides of the (plate like) counter electrode, one or more corona discharge wires may be configured (with a non-zero distance, for instance bridged by one or more insulators).

The term "corona discharge" is known in the art. A corona is a process by which a current, perhaps sustained, develops from an electrode with a high potential in a neutral fluid, usually air, by ionizing that fluid so as to create a plasma around the electrode. The ions generated eventually pass charge to nearby areas of lower potential, or recombine to form neutral gas molecules. When the potential gradient is large enough at a point in the fluid, the fluid at that point ionizes and it becomes conductive. If a charged object has a sharp point, the air around that point will be at a much higher gradient than elsewhere. Air (or another gas) near the electrode can become ionized (partially conductive), while regions more distant do not. When the air near the point becomes conductive, it has the effect of increasing the apparent size of the conductor. Since the new conductive region is less sharp (or curved), the ionization may not extend past this local region. Outside of this region of ionization and conductivity, the charged particles slowly find their way to an oppositely charged object and are neutralized. If the geometry and gradient are such that the ionized region continues to grow instead of stopping at a certain radius, a completely conductive path may be formed, resulting in a momentary spark, or a continuous arc. Corona discharge usually involves two asymmetric electrodes; one highly curved (such as the tip of a needle, or a small diameter wire) and one of low curvature (such as a plate, or the ground, or the herein indicated gauze). The high curvature ensures a high potential gradient around one electrode, for the generation of a plasma.

Electric charges on conductors reside entirely on their external surface (see Faraday cage), and tend to concentrate more around sharp points and edges than on flat surfaces. This means that the electric field generated by charges on a curved conductive point is much stronger than the field generated by the same charge residing on a large smooth spherical conductive shell. When this electric field strength exceeds what is known as the corona discharge inception voltage (CIV) gradient, it ionizes the air about the tip, and a small faint purple jet of plasma can be seen in the dark on the conductive tip. Ionization of the nearby air molecules result in generation of ionized air molecules having the same polarity as that of the charged tip. Subsequently, the tip repels the like-charged ion cloud, and the ion cloud immediately expands due to the repulsion between the ions themselves. This repulsion of ions creates an "electric wind" that emanates from the tip.

The corona discharge wire comprises an electrically conductive material, such as iron, aluminium, copper, titanium or steel. Also a noble metal, such as ruthenium, rhodium, palladium, silver, osmium, iridium, platinum, or gold, may be applied. Further, also an alloy of two or more of the afore-mentioned metals might be applied. Especially stainless steel may be applied.

The corona discharge wire especially is an elongated electrode, and may therefore in an embodiment also be indicated as "elongated electrode or ""elongated corona discharge wire".

The wire may in general have two transversal ends (herein also indicated as "head" and "tail"). The distance between the transversal ends define the length of the strip. In an embodiment, the corona discharge wire has a thickness in the range of 0.05-10 mm, such as 0.1-10 mm, especially in the range of 0.1-5 mm, such as 0.2-2 mm.

Hence, in a specific embodiment, the corona discharge wire has a thickness in the range of 0.05-10 mm, such as 0.05-2 mm, like 0.05-0.3 mm, especially 0.8-0.25 mm, even more especially between 0.1-0.2 mm. With such thicknesses, good corona discharge can be generated, while the wire lifetime may be good. Examples of wire materials are stainless steel or tungsten (W); especially tungsten may be applied.

Further, the length of the corona discharge wire (or corona discharge wire) may for instance be in the range of 10 mm to 50 m, or even longer. In general, the corona discharge wire (or corona discharge wire) will have a length in the range of 10 cm to 5 m. In case a plurality of corona discharge wires (or corona discharge wires) is applied, in an embodiment also corona discharge wires (or corona discharge wires) with different length may be applied, such as a subset of shorter corona discharge wires (or corona discharge wires) and a subset of longer corona discharge wires (or corona discharge wires). For instance, in a longitudinal channel two longitudinally arranged corona discharge wires (or corona discharge wires) and two transversal arranged corona discharge wires (or corona discharge wires) (all in head-tail configuration) may be applied (see further also below and in the examples).

The term corona discharge wire may in an embodiment also refer to a plurality of corona discharge wires (see also above). In an embodiment, the (the individual corona discharge wires of the plurality of) corona discharge wires may be arranged parallel. As will be clear to person skilled in the art, "parallel" may especially refer to an arrangement wherein the longitudinal faces of two or more corona discharge wires (of the plurality of corona discharge wires) are arranged parallel to each other. The mutual smallest distance between two parallel arranged corona discharge wires is preferably at least 100 mm, especially at least 200 mm, even more preferably at least 300 mm, yet even more preferably at least 400 mm, like at least 500 mm. However, in another embodiment, a plurality of corona discharge wires are applied, wherein two or more corona discharge wires are arranged in a non-parallel configuration, such as a head-tail configuration, such as with a transversal end of one corona discharge wire adjacent to a transversal end of another corona discharge wire. Especially, they corona discharge wires may in such configuration be in electrically conductive contact. For instance, the plurality of corona discharge wires may be arranged in a ribbon like structure, or a zigzag like structure. Adjacent corona discharge wires (or corona discharge wires) may be in physical contact with each other, especially a transversal end ("head or "tail") may be in physical contact with another strip, especially a transversal end of such corona discharge wire (or corona discharge wire)("tail" or "head"). Such configuration may thus include a "head-tail configuration", such as in a zigzag configuration. In this way, the corona discharge wires may form a single conductor, through which the required electrical current may be transported. A non-parallel configuration of corona discharge wires (or corona discharge wires) may have a more extended electrical field.

In one application, optionally also combinations of such embodiments may be applied. For instance, both parallel arranged corona discharge wires (or corona discharge wires) and zigzag arranged corona discharge wires (or corona discharge wires) may be applied. Optionally, an (elongated) gas channel may comprise in one part parallel arranged corona discharge wires (or corona discharge wires) and in another part a non-parallel configuration of corona discharge wires (or corona discharge wires), like a zigzag like or ribbon like structure of corona discharge wires (or corona discharge wires). A gas comprising particles to be removed may be fed through such channel.

The corona discharge wire (or corona discharge wire) may have a rectangular cross section. In alternative embodiments, the corona discharge wire has a cross section which is square, or a cross section selected from the group consisting of triangular, hexagonal, etc., and optionally polygonal (other than the already indicated rectangular, square, triangular, and hexagonal). In yet a further embodiment, a conductor is selected, which may be considered non-corona discharge wire (or corona discharge wire)like, such as a conductor having a round cross-section.

Hence, in a yet a further aspect the invention provides a gas purification system (herein also indicated as "system" or "apparatus")) comprising a corona discharge system, the corona discharge system comprising (a) an (elongated) corona discharge wire ("first electrode"), and (b) a counter electrode ("second electrode"). The gas purification system may further comprise (c) a voltage generator configured to apply a DC voltage of preferably at least 5 kV, especially at least 10 kV, to the corona discharge wire.

The elongated corona discharge wire is used as electrode, to which a potential is applied, preferably at least a voltage of 10 kV (i.e. during use, this electrode is positively charged with a voltage of e.g. preferably at least 10 kV). It appears that with such configuration, gas comprising particles between the elongated corona discharge wire and counter electrode, or even some distance away from the elongated corona discharge wire and counter electrode and not between these electrodes, such as over a set of elongated corona discharge wire and counter electrode, may be purified from particles. It also surprisingly appears that with the present invention, dimensional freedom is larger than with pure needles, which dimensional freedom may for instance be of relevance when applying the corona discharge system within a channel.

Herein, the invention is especially explained in relation to a corona discharge wire as elongated corona discharge wire. However, in other aspects of the invention, the elongated corona discharge wire comprises an elongated electrode comprising a cross section which is selected from the group consisting of triangular, hexagonal, polygonal (other than the already indicated rectangular, square, triangular, and hexagonal), round, oval. In yet a further aspect, the cross section is a lateral distortion (i.e. a distortion perpendicular to a longitudinal axis of the elongated corona discharge wire) of such cross-section as mentioned before.

Especially preferred cross-sections are triangular, square, rectangular, round or oval. However, as indicated above, the invention is especially explained in relation to a corona discharge wire as elongated corona discharge wire, especially having a round cross-section.

Especially, the counter electrode is grounded (earthed; i.e. connected to ground (earth)). Alternatively, the counter electrode has opposite sign of the corona discharge wire (during operation of the gas purification system). It appears that an electric field is created that may lead the particles to the counter electrode, especially when the corona discharge wire (corona discharge wire) is configured as positive electrode. Hence, the voltage generator may especially be arranged to generate a positive charge at the corona discharge wire. In yet a further embodiment, the counter electrode is earthed (grounded). Especially, the corona discharge wire is configured as positive electrode, the voltage generator may especially be arranged to generate a positive charge at the corona discharge wire (during operation of the gas purification system), and the counter electrode is earthed (and the voltage generator thus further arranged to generate the herein indicate voltage between the electrodes). Hence, especially the voltage generator is arranged to generate the herein indicate voltage between the corona discharge wire and second electrodes, i.e. especially between the corona discharge wire and counter electrode, with the former preferably being positively charged (during use), and the latter preferably being grounded (earthed).

Optionally, however, the counter electrode is negatively charged. Therefore, in an embodiment the voltage generator may especially be arranged to generate a positive charge at the corona discharge wire and a negative charge at the counter electrode (and the herein indicated voltage between the electrodes).

In an alternative embodiment, the corona discharge wire is negatively charged and the counter electrode is earthed or positively charged. Therefore, in an embodiment the voltage generator may especially be arranged to generate a negative charge at the corona discharge wire and a positive charge at the counter electrode (and the herein indicated voltage between the electrodes).

Preferably, the corona discharge wire is positively charged, and the counter electrode is earthed or is negatively charged (during use). Preferably, a static electric field is applied (see also below). Hence, in a preferred embodiment, the counter electrode is configured to be grounded during use, and in another embodiment, the counter electrode is configured to be negatively charged during use.

The voltage generator may be any voltage generator suitable for generating a DC voltage. Optionally an AC signal may be superimposed on the DC voltage, as long as (during use of the apparatus) the sign of the signal does not change. The voltage generator may especially be configured to apply (during use of the apparatus) a DC voltage of at least 10 kV to the corona discharge wire, more preferably a DC voltage of at least 20 kV, and optionally an AC signal superimposed on the DC voltage. Hence, the method of the invention includes applying a DC voltage of at least 10 kV, preferably at least 20 kV to the corona discharge wire. The voltage applied may especially not be larger than 50 kV, such as not larger than 40 kV, especially not larger than 30 kV (i.e. especially between the corona discharge wire and the counter electrode, with the corona discharge wire having the indicated voltage relative to the counter electrode).

Optionally, (as indicated above) a negative voltage is applied to the corona discharge wire. In those instances, the indicated voltages are the same, but with opposite sign. In such instances, the counter electrode may also be grounded. Optionally, the counter electrode is positively charged, see also below. Hence, in such embodiments, the voltage generator may in fact be configured to apply a DC voltage of at least -5 kV (i.e. -5 kV and more negative potentials), especially at least -10 kV (i.e. - 10 kV and more negative potentials), to the corona discharge wire.

Hence, in an embodiment, during use, a voltage difference of preferably at least 10 kV, such as 10-50 kV, especially 10-40 kV, such as 10-30 kV, like at least 12 kV, is applied between the corona discharge wire and the counter electrode, with in an embodiment the corona discharge wire having a higher voltage than the counter electrode. For instance, to the corona discharge wire a voltage of 10 kV may be applied, while the counter electrode being earthed (grounded).

As indicated above, the counter electrode is preferably earthed, although in an embodiment, during use this counter electrode may also be negatively charged. Hence, in an embodiment, the voltage generator may be configured to apply (during use) a positive charge to the corona discharge wire and optionally a negative charge to counter electrode or the counter electrode is earthed. Hence, in an embodiment the corona discharge wire may be configured as positive electrode (during use) and the counter electrode may be earthed.

As indicated above, the term corona discharge wire may in an embodiment also refer to a plurality of corona discharge wires. As will be clear from the above, the corona discharge wires are preferably arranged parallel. The mutual smallest distance between two parallel arranged corona discharge wires is preferably at least 200 mm, even more preferably at least 300 mm, yet even more preferably at least 400 mm, like at least 500 mm. In an embodiment, the distances are not larger than 200 cm, like not larger than 150 cm. Such distances may also apply to corona discharge wires that are not electrically connected to each other and which are not configured parallel.

The voltage generator may be any voltage generator suitable for generating a DC voltage. Optionally an AC signal may be superimposed on the DC voltage, as long as (during use of the apparatus) the sign of the signal does not change. The voltage generator may especially be configured to apply (during use of the apparatus) a DC voltage of at least 10 kV to the corona discharge wire, more preferably a DC voltage of at least 20 kV. Hence, the method of the invention includes applying a DC voltage of at least 10 kV, preferably at least 20 kV to the corona discharge wire. The voltage applied may not be larger than 50 kV, such as not larger than 40 kV, especially not larger than 30 kV.

As will be clear to the person skilled in the art, the counter electrode is used as counter electrode. This counter electrode is preferably earthed, although in an embodiment, during use this counter electrode may also be negatively charged. Hence, in an embodiment, the voltage generator may be configured to apply a positive charge to the corona discharge wire and optionally a negative charge to counter electrode or the counter electrode is earthed. Hence, in an embodiment the discharge wire may be configured as positive electrode and the counter electrode may be earthed. The voltage generator may further be configured to apply an electric current of at least 50 µA, such as at least 80 µA, more especially at least 100 µA, per meter corona discharge wire. With lower currents, the discharge may not be created or may not be effective enough. Hence, the method of the invention may further comprise applying an electric current of at least 50 µA, such as at least 80 µA, more especially at least 100 µA, per meter corona discharge wire. Preferably, the corona discharge system may be configured to generate a current of not more than 1A, especially not more than 50 mA, such as not more than 10 mA, especially not more than 5 mA, such as at maximum 500 µA per corona discharge wire.

Due to the application of a positive (or negative) voltage to the corona discharge wire (during use of the system), an electric field is created between the corona discharge wire and the conductive counter electrode. Hence, the corona discharge system is especially arranged to create an electric field between the corona discharge wire (corona discharge wire) and the counter electrode. The electric field is especially in the range of about 0.1-100 kV/m. In a specific embodiment, the electric field is in the range of about 0.5-100 kV/m, even more especially in the range of about 2-100 kV/m, yet even more especially in the range of about 4-100 kV/m. Especially, the electric field may be smaller than about 50 kV/m, more especially smaller than 20 kV/m. The electric field is applied between a corona discharge wire, especially being a positive electrode arranged to generate a corona discharge, and a second electrode, especially being an earthed electrode.

The corona discharge wire(s) may be isolated from the elongated gas discharge channel, especially the first face, below which the corona discharge wire(s) may be positioned. To this end, insulators may be applied. The corona discharge wire may therefore be arranged between insulators.

The combination of corona discharge wire and counter electrode are herein also indicated as "the electrodes". The counter electrode is of an electrically conductive material. The same materials as mentioned above, may be applied, such as stainless steel. The counter electrode may comprise a conductive plate, such as a stainless steel plate. In another embodiment, the counter electrode comprises a conductive wire mesh, such as a 2D wish mesh, or a 3D wire mesh. In yet another embodiment, which may be combined with the former embodiments, the counter electrode comprises one or more curvatures. Hence, in a specific embodiment, the counter electrode comprises a concave part, such as a concave plate. For instance, the counter electrode may comprise a (concave) conductive plate, having substantially the same length as the corona discharge wire or strip.

The counter electrode may in an embodiment be integrated in for instance street furniture, see also below.

Especially, the counter electrode is grounded. Alternatively, the counter electrode has opposite sign of the corona discharge wire (during operation of the gas purification system). It appears that an electric field is created that may lead the particles to the counter electrode, especially when the corona discharge wire (corona discharge wire) is configured as positive electrode. Hence, the voltage generator may especially be arranged to generate a positive charge at the corona discharge wire. In yet a further embodiment, the counter electrode is earthed (grounded). Especially, the corona discharge wire is configured as positive electrode, the voltage generator may especially be arranged to generate a positive charge at the corona discharge wire (during operation of the gas purification system), and the counter electrode is earthed (and the voltage generator thus further arranged to generate the herein indicate voltage between the electrodes).

Hence, the counter electrode may in an embodiment have the shape of a plate, which may also include a wire mesh, such as a 2D wire mesh or 3D wire mesh. However, the plate may also be a closed plate. As will be clear, the plate has electrical conductive properties, which may be due to the fact that the plate is of an electrical conductive material or comprises e.g. an electrical conductive surface. As indicated above, this counter electrode, especially such plate, may be flat or may be curved. In an embodiment, it may be in the form of a electrical conductive belt; however, it may also be a stationary plate, with the first electrode in its vicinity, especially configured parallel to the plate (to the plane of the plate). Hence, the plate can also be indicated as electrical conductive plate.

Assuming an earthed counter electrode, preferably, the counter electrode is (arranged to be) from any other earthed surface or conductive surface (in the vicinity of the corona discharge wire) preferably the closest to the corona discharge wire. Assuming a negatively charged earthed counter electrode and a positively charged corona discharge wire, the counter electrode is (arranged to be) from any other earthed surface or conductive surface (in the vicinity of the corona discharge wire) preferably the closest to the corona discharge wire. Assuming a positively charged earthed counter electrode and a negatively charged corona discharge wire, the counter electrode is (arranged to be) from any other earthed surface or conductive surface (in the vicinity of the corona discharge wire) preferably the closest to the corona discharge wire. As indicated above, the counter electrode is electrically conductive (as also the corona discharge wire is).

The term counter electrode may also refer to a plurality of counter electrodes. For instance, the corona discharge wire may be arranged between two or more counter electrodes. In an embodiment, the corona discharge wire is attached to (one or more) isolator, such as a bushing, wherein each isolator, such as a bushing, has a creeping length, wherein the creeping length is preferably configured to be at least 5 mm creeping length per kV DC voltage, especially at least 10 mm creeping length per kV DC voltage. Such isolator, such as a bushing, may comprise one or more through holes (preferably substantially) perpendicular to a longitudinal axis of the isolator, such as a bushing, configured in one or more residing parts of the isolator, such as a bushing. In this way, the cavity (cavities) between two extending disks of the isolator, such as a bushing, may better be subjected to a gas flow, thereby preventing and/or reducing fouling within the cavity.

The isolator(s), such as bushing(s), can be used, as will be clear to a person skilled in the art, to arrange the corona discharge wire (especially corona discharge wire) in electrical isolation from an electrically conductive surface (except for one or more electrode connections with the voltage generator), such as for instance the counter electrode. Herein, as example of isolators, often bushings are used. However, other isolators may be used as well.

Hence, the corona discharge wire (as corona discharge wire) is in an embodiment remote from the counter electrode. In an embodiment, the corona discharge wire is not in electrically conductive connection with the counter electrode due to a non-zero distance. For instance, this distance may be created by arranging isolators, such as between the corona discharge wire and the counter electrode (see also above). In an embodiment, the closest electrically conductive surface (other than the corona discharge wire), is at a non-zero distance from the corona discharge wire. In an embodiment, the closest electrically conductive surface (other than the corona discharge wire), is at a non-zero distance from the corona discharge wire, which may be created by arranging isolators, such as between the corona discharge wire and the closest electrically conductive surface.

Especially good results may also be obtained when the counter electrode is removable. In this way, the counter electrode may be cleaned from deposits. In a specific embodiment, the counter electrode is part of a belt of a conveyor belt, wherein the conveyor belt is configured to run the belt through the elongated gas channel. Outside the gas channel, the conveyor belt may be cleaned from deposit(s), and return to the internal of the gas channel, for receipt of new deposition. The belt may for instance comprise stainless steel parts. In an embodiment, the belt is from stainless steel. As will be clear to the person skilled in the art, the counter electrode comprises an electrically conductive material

To further improve the result of the method, at least part of the purified gas may be returned to the gas purification system to be subjected again to the method for purifying air. Hence, the gas purification system may further comprise a gas return system, configured to recirculate at least part of the gas through the gas transport unit.

In a further embodiment, the corona discharge wire is (though in electrical isolation) connected to the counter electrode. For instance, as indicated above, the counter electrode may be attached to the first face of the gas channel. However, as also indicated above, the application of the invention is not limited to specific gas channels (enclosing one or more corona discharge wires / corona discharge wires).

In an embodiment, the combination of corona discharge wire and counter electrode may be a (relative simple) arrangement of a plate like counter electrode and the corona discharge wire attached to the plate like counter electrode (but not in electrically conductive contact, such as with one or more isolators, such as in between). The plate like counter electrode may have a counter electrode first face, a counter electrode second face and a counter electrode edge. Such plate like electrode may have a thickness defined by the distance between the counter electrode first face and the counter electrode second face (i.e. the edge height). The corona discharge wire may be attached to the counter electrode first face (with isolators, such as in between); optionally a plurality of corona discharge wires may be arranged to the counter electrode first face.

Optionally, one or more corona discharge wires may also be arranged to the counter electrode second face. The former embodiments, i.e. with one or more corona discharge wires at only the counter electrode first face may be attached (with the second face) to a wall, or a ceiling, or may be integrated in a gas channel, etc. The former embodiment and the latter embodiments, i.e. with one or more corona discharge wires also at the counter electrode second face may be arranged to suspend from a ceiling (such as in a vertical arrangement).

As indicated above, when applying a plurality of corona discharge wires (at one face), they may for instance be arranged parallel or in a head-tail arrangement.

In yet a further aspect, the invention provides a method for purifying a gas, especially air, from an accommodation, wherein the accommodation may for instance be selected from the group consisting of for instance a shed, a stable, a sty, a fold and a poultry farm, wherein the method comprises leading gas of the accommodation through the gas purification system as defined herein, while applying a DC voltage of at least 10 kV to the corona discharge wire, with the corona discharge wire preferably being the positive electrode, and the counter electrode preferably being earthed. More in general, the invention further provides a method for purifying air comprising leading air through (or over) the gas purification system as defined herein, while applying a DC voltage of at least 10 kV to the corona discharge wire. The corona discharge wire may especially be enclosed within the (elongated) channel (see above and below).

However, in alternative embodiments, the accommodation may be selected from the group consisting of a garage, a hangar, a plant or factory, a railway station, a bus station, etc. However, also outdoor applications of the gas purification system and/or method of the invention are conceivable. Such as along a road, at a square, outdoor at a plant, etc.; see also below when describing the particle catch arrangement.

In yet a further embodiment, the gas purification system may be configured to purify an exhaust gas, such as of a hydrocarbon based, such as a fossil fuel based, engine, like a diesel engine. This may be the engine of a motorized vehicle, like a moped, motor, a car, a truck, a coach, a train, etc., or a motorized craft, like a ship or boat, etc., or any other motorized vehicle This engine may also be an engine of a non-mobilized application. The engine may be an engine for generating electricity, like an engine generator, such as a standby generator (using a hydrocarbon as fuel) etc. The term "hydrocarbon based engine" and similar terms relate to engines which combust such hydrocarbon to generate energy, such as mechanical energy and/or electrical energy. The hydrocarbon fuel may for instance comprise one or more of diesel, petrol, natural gas, liquid natural gas (LNG), compressed natural gas (CNG), and liquid propane gas, but also other (gaseous, liquid, or compressed) hydrocarbon fuels may be applied, which are known to the person skilled in the art.

In yet another embodiment, the exhaust gas may be the exhaust of a street sweeper (also known as road sweeper or ground cleaning machine, etc.), i.e. especially the exhaust of a vacuum system of such street sweeper. The exhaust gas of such vacuum system is in general exhausted without treatment, which may lead to exhaust of fine dust, etc. The gas purification system of the invention may greatly reduce reduction of fine dust of such street sweeper. The gas purification system may thus be applied as a kind of gas filter. Also other vacuum clean exhaust gas may be purified by applying the purification system and method of the invention.

Hence, in an embodiment, the invention also provides a motorized vehicle, comprising the gas purification system as defined herein, configured to purify an exhaust gas of the motorized vehicle (such as the exhaust gas of a (diesel) engine of such motorized vehicle). Especially, the invention also provides an embodiment of a street sweeper comprising the gas purification system as defined herein, configured to purify the exhaust gas of a vacuum system of the street sweeper (and/or the exhaust gas of a (diesel) engine of such motorized vehicle.

In yet a further embodiment, the gas purification system and method may be applied to purify an exhaust gas of a plant, such as a fossil fuel power station, or from a coal gasification plant, etc.

Hence, the emission of all also kind of applications which emit small particles, such as smut particles, fine dust particles and exhaust gas particles, may be subjected to the method of the invention. And thus, also all kind of applications which emit small particles, such as smut particles, fine dust particles and exhaust gas particles, may further include the purification system of the invention. The precise configuration of the gas purification system, such as a channel with the corona discharge wire, or the combination of the corona discharge wire and the counter electrode plate, etc., may be adjusted to the type of application. The application may be any application using an engine that emits small particles, especially exhaust gas particles, such as petrol or diesel engines, especially diesel engines. Such applications may be substantially immobile, like an engine for generating electricity, like an engine generator, such as a standby generator etc., but may also be mobile ("vehicle"), such as an engine of a transport means such as a boat or truck (see also above). The application may also be an application that generates small particles not (only) based on an engine, like a diesel engine, but based on other sources of such small particles. For instance applications like a street sweeper (see also above), road building equipment, such as an asphalt distributor, a device or apparatus configure to machine (machining device or apparatus, such as configured for "traditional" machining processes, such as turning, boring, drilling, milling, broaching, sawing, shaping, planing, reaming, and tapping, or grinding, or even for modem machining such electrical discharge machining, electron beam machining, photochemical machining, and ultrasonic machining, etc.), like for instance a road cutting apparatus, a stone or concrete cutting apparatus, drilling machines, etc. etc.

The application may also be a device or apparatus, or site (location), configured for transhipment of bulk products like particulate bulk products such as maize, corn, fruit, nuts, potatoes, flour, sand, ore, vegetables, etc. etc. The gas purification system may in an embodiment be attached to the application or may in another embodiment be integrated in the application.

Especially, the method may comprise applying a DC voltage of at least 20 kV to the corona discharge wire. As indicated above, the corona discharge wire may be configured as positive electrode and the counter electrode may be earthed. In yet a further embodiment, the method may further comprise applying a stationary electric field between the corona discharge wire and the counter electrode in the range of 2-100 kV/m.

The system and method may (thus) be applied in existing accommodations such as a shed, a stable, a sty, a fold, or a poultry farm. Hence, the gas purification system and the method for purifying of the invention may especially be applied in agricultural applications. The term "accommodation" may relate to any cage, stable, shed, sty, fold, and also farm, for hosting one or more animals, especially a plurality of animals, such as pigs, cows, horses, goats, pigeons, birdhouse birds, tropical birds, gooses, mink animals or fir animals. The method may be applied within such building, or a unit (comprising an arrangement, see below), may be provided to which the air of the building is guided for treatment according to the invention. The phrase "method for the removal" and/or the term "purification" include a partial removal and does not necessarily indicate a total removal or total purification.

However, as indicated above, the system and method may also be applied in for instance a garage, a hangar, a plant or factory, a railway station, a bus station; or in outdoor applications.

However, the gas purification system may for instance also be used to remove undesired particles (and optionally gasses) from for instance a laboratory, a plant, a hospitality area, a clean room, an operation chamber, etc. The gas purification system may also be applied to clean an exhaust gas, such as from a plant, a motorized vehicle (such as a moped, a motor, a car, a coach, a truck, a train, a boat, etc.)(see also above).

Hence, the gas purification system of the invention may in an embodiment be used for cleaning gas, especially air, from an accommodation, such as for instance selected from the group consisting of a shed, a stable, a sty, a fold and a poultry farm, etc., or for instance selected from a laboratory, a plant, a hospitality area, a clean room, and an operation chamber, etc., but in an embodiment also for cleaning gas of other sources, such as indicated above. Especially, the gas purification system of the invention may be used for the removal of fine dust from a gas and/or for the removal of germs like bacteria, viruses, spores, fungi and also for the removal of parasites. More especially, the gas purification system of the invention may be used for the removal of fine dust from a gas and/or for the removal bacteria, viruses and fungi, from a gas, especially air.

The gas purification system may be arranged within the accommodation or may be arranged outside the accommodation (in gaseous contact with at least part of the atmosphere within the accommodation).

In a specific embodiment, especially when the air is humid or humidified, for instance humidified with a water haze, the gas purification system of the invention may also be used for the removal of ammonia (NH₃) and/or undesired odours, and/or other compounds, from a gas. In a specific embodiment, the apparatus further comprises a liquid atomizer or nebulizer, configured to provide a liquid haze, such as a water haze between the corona discharge wire and the counter electrode. The haze may be generated within the gas elongated channel, but may also be generated upstream from the inlet of the elongated gas channel. Hence, the invention also provides in a further aspect an accommodation, such as selected from the group consisting of a shed, a stable, a sty, a fold and a poultry farm, or another accommodation, such as indicated above, comprising the gas purification system, as described herein, for purifying the air from the accommodation.

However, as indicated above, the gas purification system, optionally including such liquid atomizer or nebulizer, may also be applied for gas purification of hydrocarbon based engines, or for purifying gas from an exhaust of a vacuum clean system, such as a street sweeper.

The invention further provides a particle catch arrangement comprising the gas purification system as defined herein, wherein at least part of the gas purification system is part of, or integrated with, an object comprising street furniture, for instance a sound barrier, a crash barrier, a tunnel wall, a road sign, a traffic information system, a street lamp or a traffic light.

For instance, the counter electrode may be part of such street furniture. This may also enclose embodiment wherein a part of street furniture is integrated in the gas purification system. For instance, part of a tunnel wall might be used as counter electrode. In a specific embodiment, the counter electrode is attached to or integrated in one or more of a sound barrier, a crash barrier, and a tunnel. In a specific embodiment, the gas purification system comprises the corona discharge wire and a plate-like counter electrode, wherein both are arranged parallel to the (local) earth's surface, wherein in an embodiment the counter electrode comprises a curved element, which may be attached to ore integrated in for instance a tunnel wall.

The term "substantially" herein, such as in "substantially parallel" or in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The apparatus herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device or apparatus claims enumerating several means, several of these means may be embodied by one and the same item of hardware. The mere fact that certain measures are recited in mutually different dependent claims does not indicate that a combination of these measures cannot be used to advantage.

The invention further applies to an apparatus comprising one or more of the characterising features described in the description and/or shown in the attached drawings. The invention further pertains to a method or process comprising one or more of the characterising features described in the description and/or shown in the attached drawings.

The various aspects discussed in this patent can be combined in order to provide additional advantages. Furthermore, some of the features can form the basis for one or more divisional applications.

### Brief description of the drawings

Embodiments of the invention will now be described, by way of example only, with reference to the accompanying schematic drawings in which corresponding reference symbols indicate corresponding parts, and in which:
Figs. 1a-1c schematically depicts some embodiment and variants thereon of the gas purification system of the invention;
Figs. 2a-2b schematically depict embodiments of the gas purification system of the invention;
Figs. 3a-3c schematically depicts some applications of the gas purification system of the invention;
Figs. 4a-4f schematically depict some embodiments of the gas purification system;
Fig. 5a-5f schematically depicts some embodiments of possible isolator, such as a bushing;
Figs. 6a-6b schematically depicts some applications of the gas purification system of the invention;
Figs. 7a-7e schematically depict some further variants; and
Figs. 8a-8c very schematically depict a non-limiting number of applications.

The drawings are not necessarily on scale

### Description of preferred embodiments

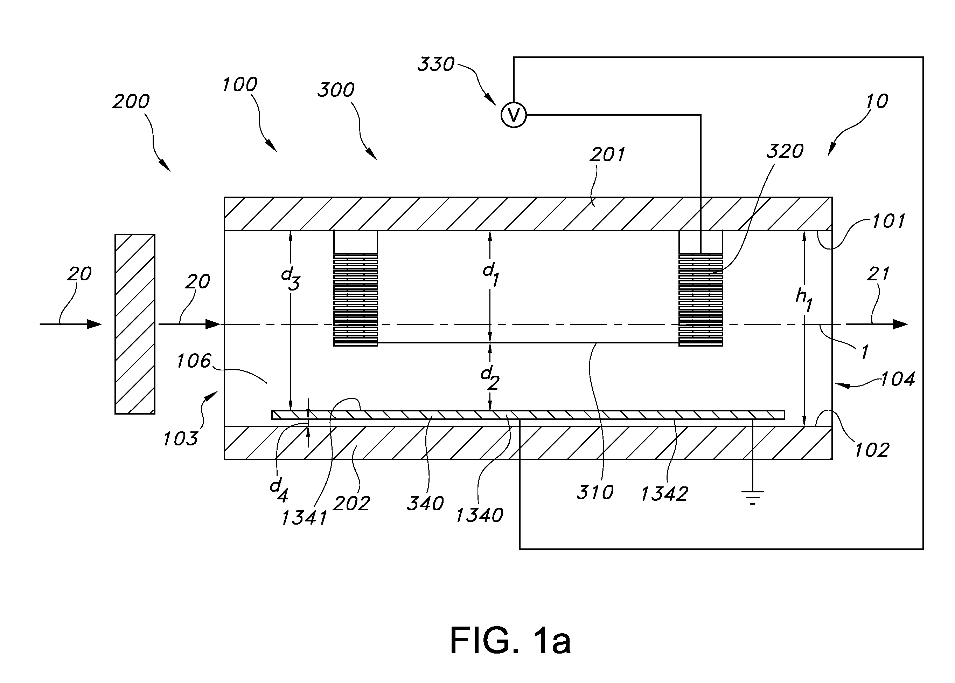

Figs. 1a-1c schematically depicts an embodiment of the gas purification system of the invention. The gas purification system is indicated with reference 10 and comprises an elongated gas channel 100, a gas transport unit 200, and a corona discharge system 300.

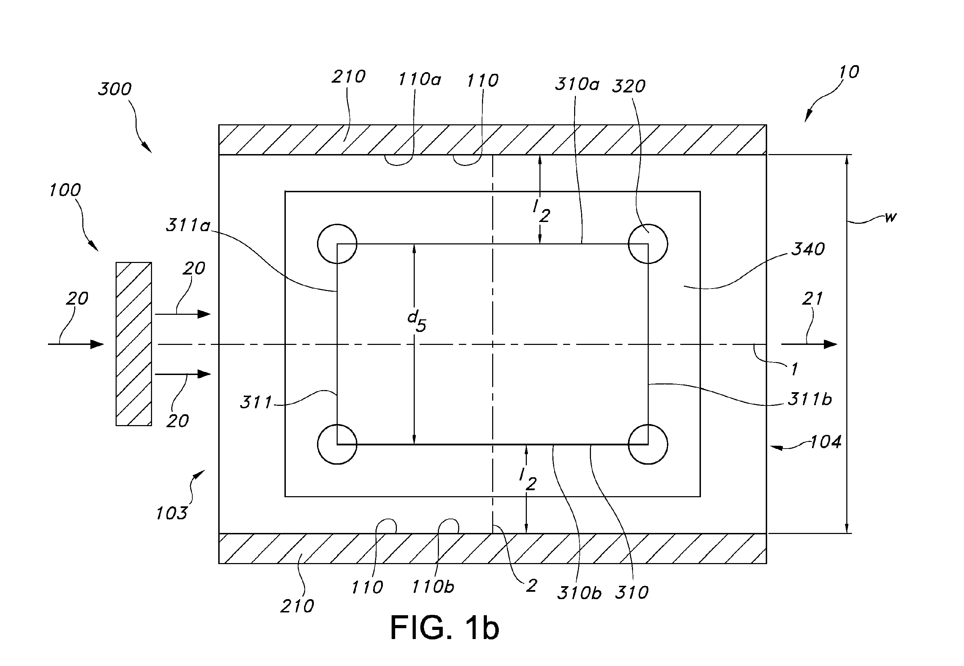

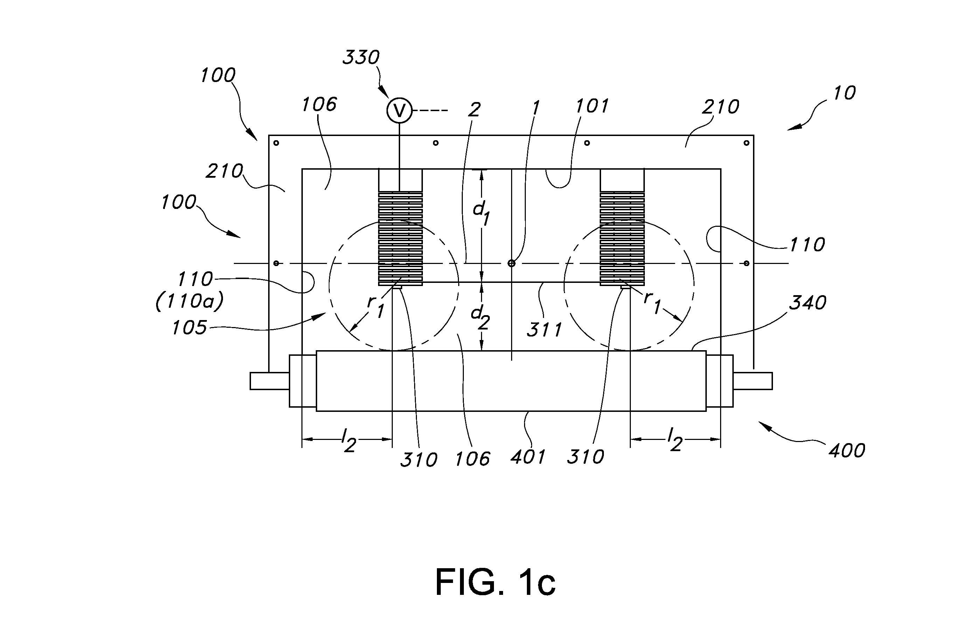

The schematic drawing 1a is a cross-sectional view in the length direction of the elongated gas channel 100 ("side view"); fig. 1b is a cross-sectional view in the plane of the elongated gas channel 100 ("top view"); fig. 1c is a front view of the elongated gas channel 100.

The elongated gas channel 100 has a first face 101 (which may also be indicated as top face), a second face 102 (which may also be indicated as bottom face) opposite of the first face 101, and edges (or edge faces) 110. The elongated gas channel 100 further has a rectangular cross-section 105. The two opposite edges 110 are further indicated with references 110a and 110b, respectively. The elongated gas channel 100 has a channel height h1 ("height" h1) and a longitudinal axis 1. The height h1 of the channel may for instance be in the range of 0.1-2 m, such as 0.2-1 m. The elongated gas channel 100 has an channel inlet 103, for introduction of gas 20, and a channel outlet 104, for exhaust of purified gas 21. The length, indicated with reference 11, of the elongated gas channel 100 between the channel inlet 103 and channel outlet 104 may for instance be in the range of 0.2-100 m, like 0.5-20 m, even more especially at least 1 m.

The walls are indicates as first wall 201, which has the first surface 101, second wall 202, which has the second surface 102, and edge walls 210, with the edges or edge surfaces 110. The first surface, the edge surfaces 110 and the second surface 102 enclose the channel internal or channel volume 106.

First wall 201, the second wall 202, and the edge walls 210 are preferably of a low or non-conductive material. Relative to the counter electrode, their conductivity is preferably at least 1000 times lower, or even at least 100.000 lower. Of course, in embodiments where the second face 102 includes the counter electrode 340, the conductivity of at least part of the second wall is high, as it should be electrical conductive.

As indicated above, the gas purification system 10 further comprises gas transport unit 200. The gas transport unit 200 is configured to transport gas 20 through the elongated gas channel 100. The gas transport unit may be a fan, a rotator, a ventilator, a pump, etc.

As indicated above, the gas purification system 10 further comprises corona discharge system 300. This corona discharge system comprises a counter electrode 340 within the elongated gas channel 100, i.e. at least partly, but in general entirely, configured within the internal 106 of the elongated gas channel. The counter electrode 340 is configured at a distance from the first face 101. The counter electrode 340 has a counter electrode distance d3 to the first face 101, with in this schematically depicted embodiment ½h1<d3≤h1. Hence, when seen from the first face 101, the counter electrode is beyond the middle of the elongated gas channel 100 ("behind the longitudinal axis"). The counter electrode is thus closer to the second surface 102 than the first surface 102.

In an embodiment, not depicted, the second surface 102 may comprise the counter electrode 340. In another embodiment, not depicted, the counter electrode 340 may form the second surface 102. Therefore, d3 may also be equal to h1.

The distance between the counter electrode 340 and the first surface 102 is indicated with reference d4. This distance may be a few millimetres, although, as indicted in the previous paragraph, d4 may also be zero when the second surface 102 comprises the counter electrode 340 or the counter electrode 340 form the second surface 102.

The gas purification system 10, or more precisely the corona discharge system 300, further comprises corona discharge wire 310 within the elongated gas channel 100. The corona discharge wire 310 has a first distance d1 to the first face 101 and a second distance d2 to the counter electrode 304.

Like the counter electrode 340, the corona discharge wire 310 is preferably arranged beyond the longitudinal axis, when seen from the first surface 101. Hence, for the corona discharge wire applies in this schematically depicted embodiment ½h1<d1<h1. Of course, d1≠h1, because otherwise the corona discharge wire 310 would be in physical contact with the second surface 102. Further, for the corona discharge wire 310 applies d1/d2>1. Hence, the corona discharge wire 310 is closer to the counter electrode 340 than to the first surface 101. Therefore, in a specific embodiment the distances from the corona discharge wire (310) to each of the first face (101) and the edges (or edge faces) are larger than the second distance to the counter electrode (340). Especially such configuration appears to provide good purification results.

Preferably, the corona discharge wire 310 is configured parallel to the first face 101, the second face 102, and the edges 105. In other words, the corona discharge wire 310 is configured parallel to the longitudinal axis 1.

The gas purification system 10, or more precisely the corona discharge system 300, further comprises a voltage generator 330, especially configured to apply a DC voltage of at least 10 kV to the corona discharge wire 310. Good results were obtained with a wire thickness of the corona discharge wire 310 of about 0.12 mm and a voltage applied in the range of 20-30 kV.

In fig. 1a, the counter electrode 340 may be a plate like counter electrode, which is indicated with reference 1340. This plate-like electrode 1340 comprises here a first face 1341 and a second face 1342, which are (in general) configured parallel.

Fig. 1b schematically depicts the same embodiment, but now in cross-sectional top view. Note that in fact two corona discharge wires 310 are applied, both parallel with the longitudinal axis 1, which are connected with connecting wires 311. Those connecting wires 311 are optional.

As will be clear to the person skilled in the art, alternatively only one corona discharge wire 310 may be applied, or more than 2 corona discharge wires 310 may be applied. Especially, the distance d5 between the wires is at least 20 cm, more especially at least 30 cm, even more especially at least 40 cm. the edge walls 210 have edge faces 110, which are respectively indicated with first edge face 110a and second edge face 110b. The distance between the edge faces 110 (i.e. 110a and 110b) is indicated with width w. Hence, per 20 cm width or more, a corona discharge wire 310 may be applied. Further, more than one corona discharge wire 310 may be arranged behind one another, for instance when the elongated gas channel 100 is long. The length 11 of the channel may for instance be in the range of 1-50 m. For instance, in such channel 20 corona discharge wires 310 may be arranged between one another, with longitudinal distance between one another of for instance at least 20 cm, such as at least 40 cm (especially also equal to d5).

In fig. 1b, reference 2 indicates the centre line of the elongated gas channel 100. Reference 12 indicates the distance from the corona discharge wire 310 to the (nearest) edge surface 110. Preferably, 12>d2.

Fig. 1b schematically depicts an embodiment wherein the corona discharge wires 310 are connected via connecting wires 311 (which are also electrically conductive). When the method of the invention further comprise applying an electric current of at least 50 µA, such as at least 80 µA, more especially at least 100 µA, per meter corona discharge wire 310, and corona discharge wires are connected with connecting wire, the length in meters of the entire conductive circuit should be used as length. Hence, the invention in this embodiment might also include Hence, applying an electric current of at least 50 µA, such as at least 80 µA, more especially at least 100 µA, per meter corona discharge wire 310 and connecting wire (in this embodiment the length in meters of first corona discharge wire 310a, connecting wire 311a, second corona discharge wire 310b, and second connecting wire 311b).

Fig. 1c schematically depicts another cross-sectional view. From this drawing can be seen that the elongated gas channel 100 has a rectangular cross-section. Here, the cross-section perpendicular to the longitudinal axis 1 is meant. This figures shows that the distance from the discharge wire 310 to the closest edge face 110, indicated with 12, is longer than d2. Also the distance d1 of the corona discharge wire 310 to the first face 101 is longer than d2. This is also shown by depicting radius r1. Especially, when the radius r1=d2, preferably no other items of the gas transport unit (other than the optional connection wire and a insulator 320), are present within that radius, but are more remote than r1 (=d2).

Fig. 1c also schematically depicts a specific variant, wherein an endless conveyor belt 400 is applied. The conveyor belt 400 comprises a belt 401. The conveyor belt 400 is configured to run the belt 401, or at least part of it, through the elongated gas channel 100. Further, the belt 401 is configured as counter electrode 340 or comprises the counter electrode 340. A conveyor belt (or belt conveyor) in general consists of two or more pulleys, with a continuous loop of material (the "belt") that rotates about them. The term "endless" is used in order to indicate that the belt is in a continuous loop or rotation (around two or more pulleys). For instance, the belt 401 may comprise stainless steel parts.

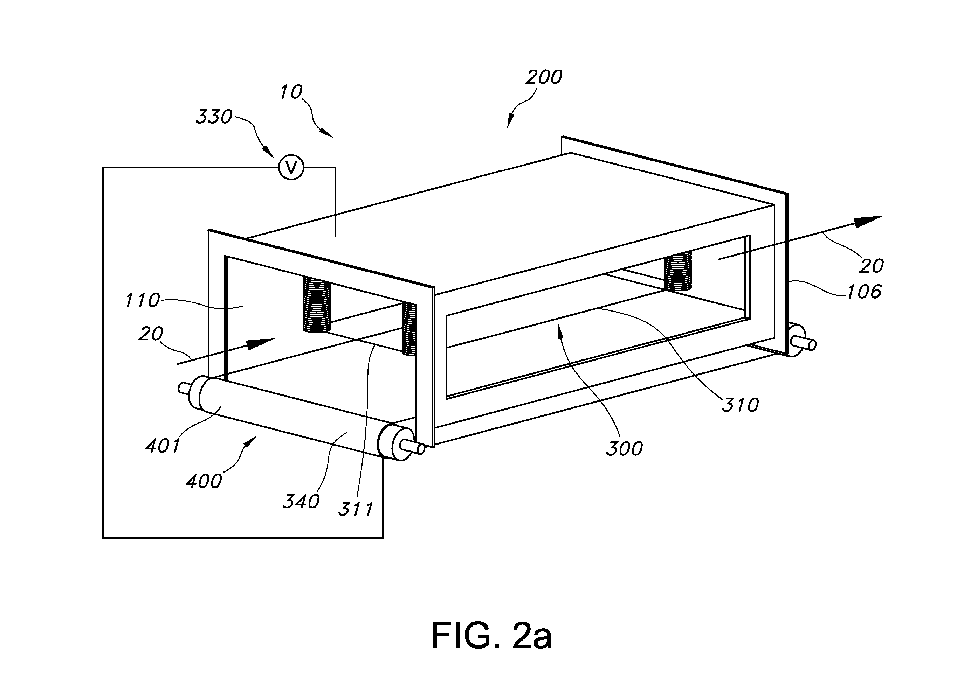

Fig. 2a schematically depicts a 3D view of an embodiment of the elongated gas channel 100, again with conveyor belt 400. The conveyor belt 400 is configured to have the upper part of the belt 401 run within the elongated gas channel 100 and the lower part of the belt 401 run outside the elongated gas channel. Find dust and/or other particles, like germs, that deposit on the counter electrode, comprises by the belt 401, thus also leaves the elongated gas channel 100 and can be removed from the belt 401 outside the elongated gas channel 100. In a specific embodiment, the conveyor belt 400 may be configured to run its belt 401 within the elongated gas channel counter current with the gas flow. This may add to turbulence. Turbulence is desired, in order to maximize deposition of particles, such as fine dust and/or germs.

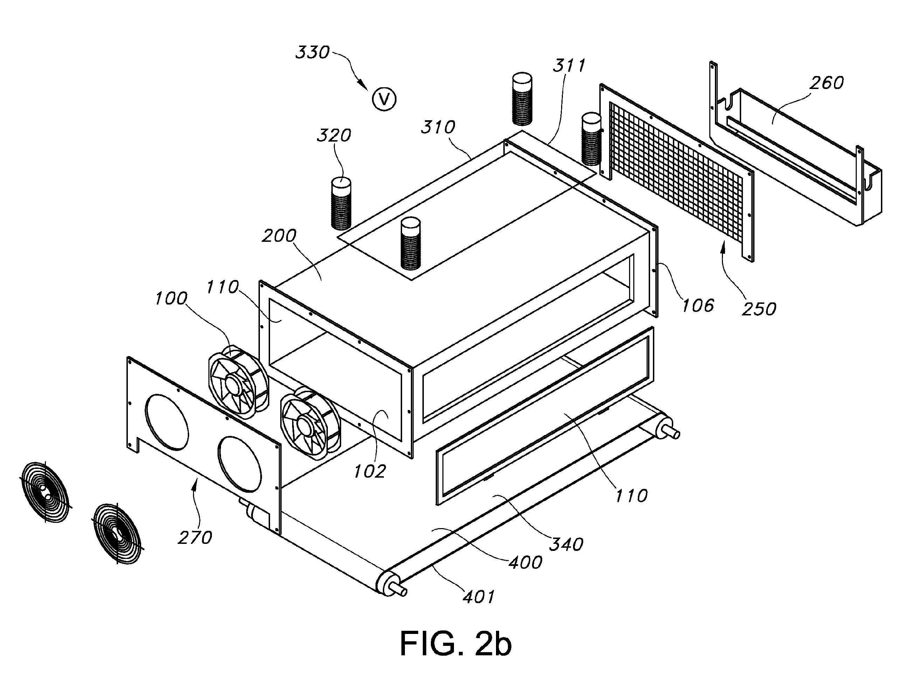

Fig. 2b schematically depicts arts of the gas purification system 10. Reference 250 refers to a wire gitter that may be applied at the outlet 104, for instance for protection. Reference 260 refers to a receiver part, that may receive deposited particles that are scraped of the belt 401, and reference 270 refers to a front plate.

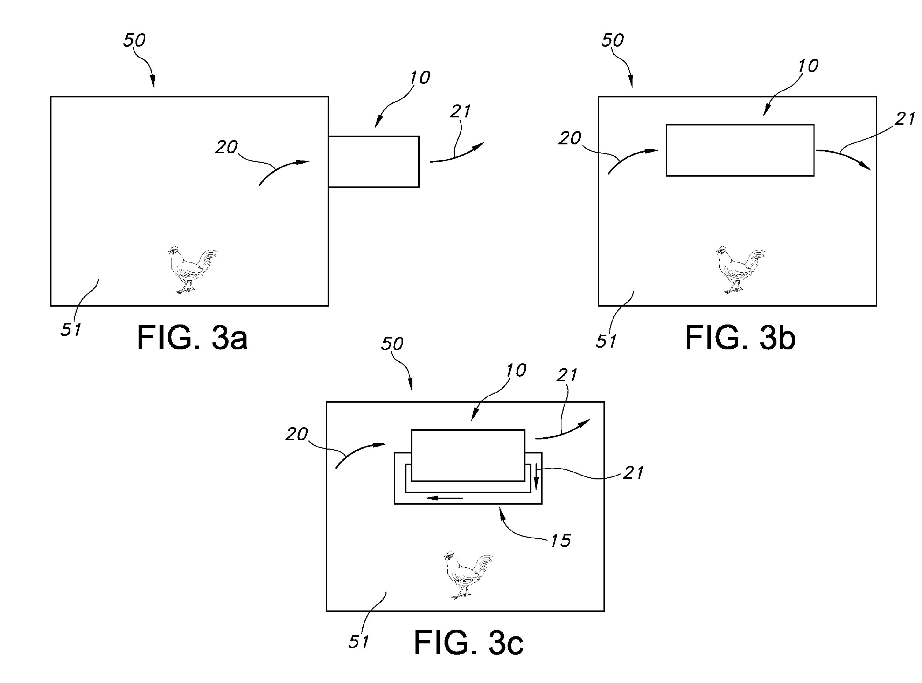

Figs. 3a-3c schematically depict embodiments wherein an accommodation 50 is equipped with the gas purification system 10 of the invention. For instance, gas, such as air, from the accommodation may be exhausted from the accommodation 50 via the gas purification system. Purified gas 21 may then be exhausted (fig. 3a). However, the gas purification system 10 may also be applied to purify the gas 20 from the accommodation, and return purified gas 21 back into the accommodation 50. Fig. 3b schematically depicts an embodiment of accommodation 50 including the gas purification system 10 for for instance cleaning air. Fig. 3c schematically depict an application of the gas purification system 10, including a gas return 15. In this way, the purification may even be increased. The return 15 can be used to circulate at least part of the purified gas back into the gas purification system 10. Reference 51 indicates the interior of the accommodation 50.

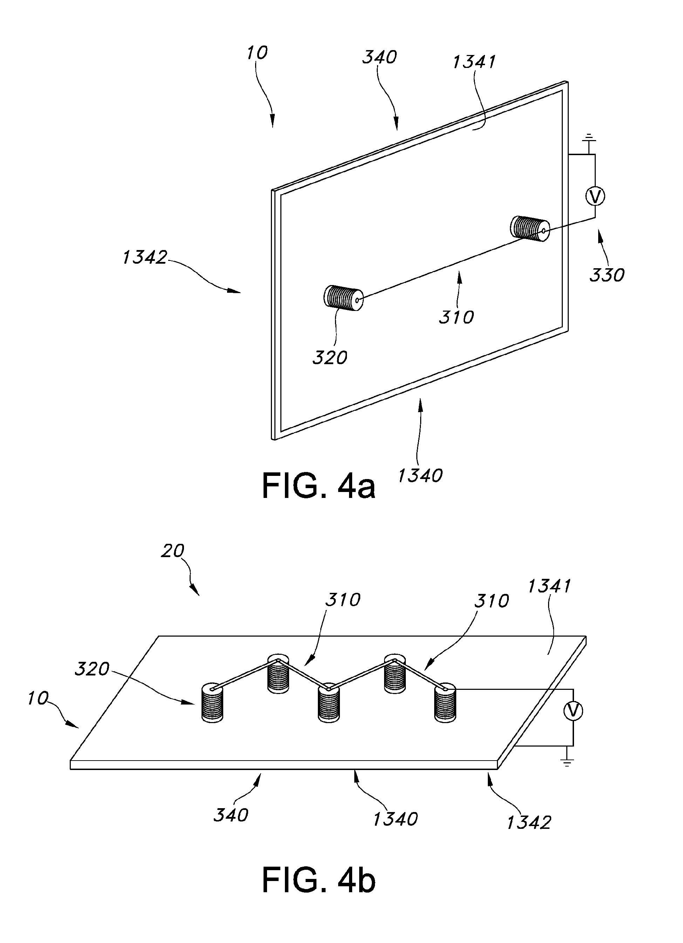

Figs. 4a-4b schematically depict some embodiments. Reference 330 refers to a voltage generator. Reference 1340 indicates that the counter electrode is a plate like counter electrode. Hence, reference 1340 indicates such plate like counter electrode, for instance a stainless steel plate (which may optionally be curved, see also below). Fig. 4b schematically depicts en embodiment wherein a plurality of corona discharge wires 310 is applied. In this variant, the corona discharge wires 310 are arranged head to tail, and are in electrical connection with each other. Due to the head to tail arrangement, only one electrical connection with one corona discharge wire 310 is necessary. When applying the herein indicated voltage, the fine dust particles, etc., may be guided to the counter electrode 340 and deposit there. In this way, this relative simple configuration of the gas purification system 10 may efficiently reduce the fine dust content in air or a gas flow. In practical experiments, deposition is found on the counter electrode and relevant reductions of fine dust, etc., is observed. The plate like counter electrode 1340 comprises here a first face 1341 and a second face 1342, which are configured parallel.

In figs. 4a-4b/2c gas, such as air, may flow between the corona discharge wire and the counter electrode; gas, such as air, may be lead through (or over) the gas purification system while applying a DC voltage of preferably at least 10 kV to the corona discharge wire 310.

Fig. 4a comprises by way of example a single corona discharge wire 310, whereas fig. 4b schematically depicts the embodiment to include a plurality of corona discharge wires 310. In both drawings (and the next drawings), the corona discharge wire(s) 310 are configured parallel to the counter electrode 340. In fig. 4b, the plurality of counter electrodes 340 comprises a single subset, wherein the corona discharge wires 310 are configured in a zigzag or head-tail configuration.

The herein schematically depicted corona discharge wire(s) 310 have in general substantially round cross-sections.

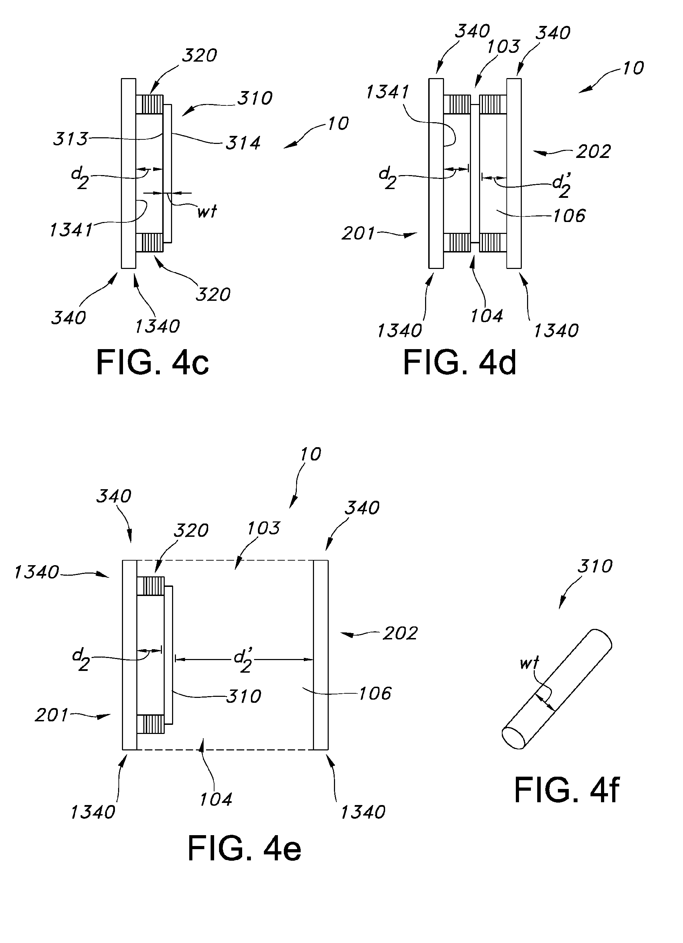

Fig. 4c schematically depicts basically the same arrangement as in fig. 4a, but now in a side view.

Figs. 4d and 4e schematically depicts an embodiment of the gas purification system 10 with two counter electrodes 340 and the corona discharge wire 310 arranged in between. The distance of the corona discharge wire 310 to the other counter electrode (or second counter electrode), is indicated with reference d2'. The value of d2' may be same as d2 (fig. 4d) or may be different (fig. 4e). The space or volume between the counter electrodes is indicated with reference 106 (internal channel).

The gas purification system 10 shown in figs. 4d and 4e may be part of an elongated gas channel (see above). Hence, by way of example, the conductive counter electrodes are comprised by first and second walls 201,202, respectively, and also dashed lines indicated the optional edge walls 103,104. The term "comprised by the wall" and similar terms may refer to the fact that the wall may function as counter electrode, a wall may have a counter electrode arranged to it, etc. The counter electrode in fig. 4e at the right side may optionally be a movable counter electrode, such as (a part of a) conveyor belt (see also below).

Figs. 4a-4e schematically depict corona discharge wires 310 that may be connected (but in electrical isolation) to one more counter electrodes 340 via electrical insulators 320 ("isolators"), such as bushings.

Figs. 4a-4e, and also the other figures, show a corona discharge wire 310 which has a corona discharge wire thickness wt, which is in the range of e.g. 0.05-10 mm. This is schematically shown in fig. 4f, wherein the corona discharge wire 310 has a round cross-section, which will generally be the case.

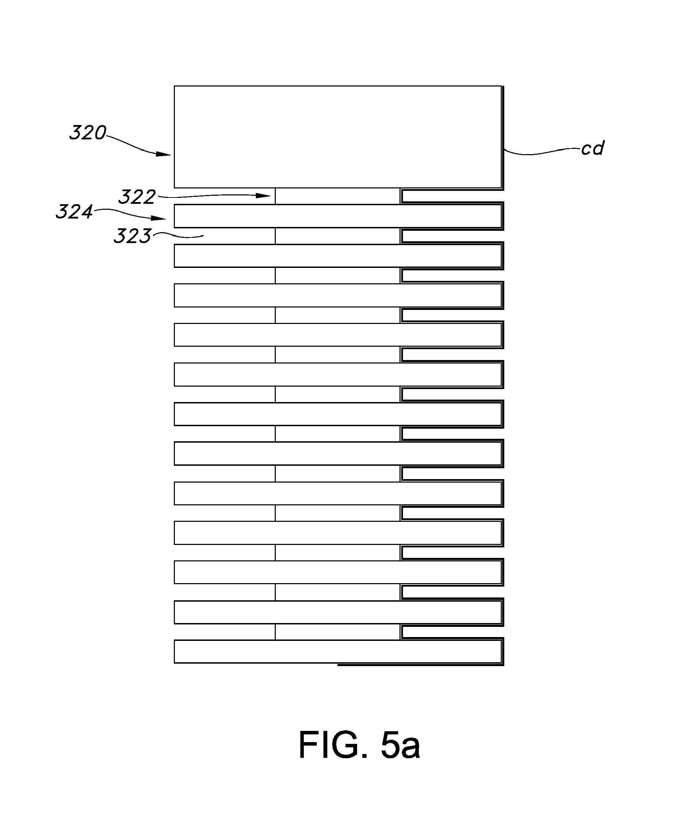

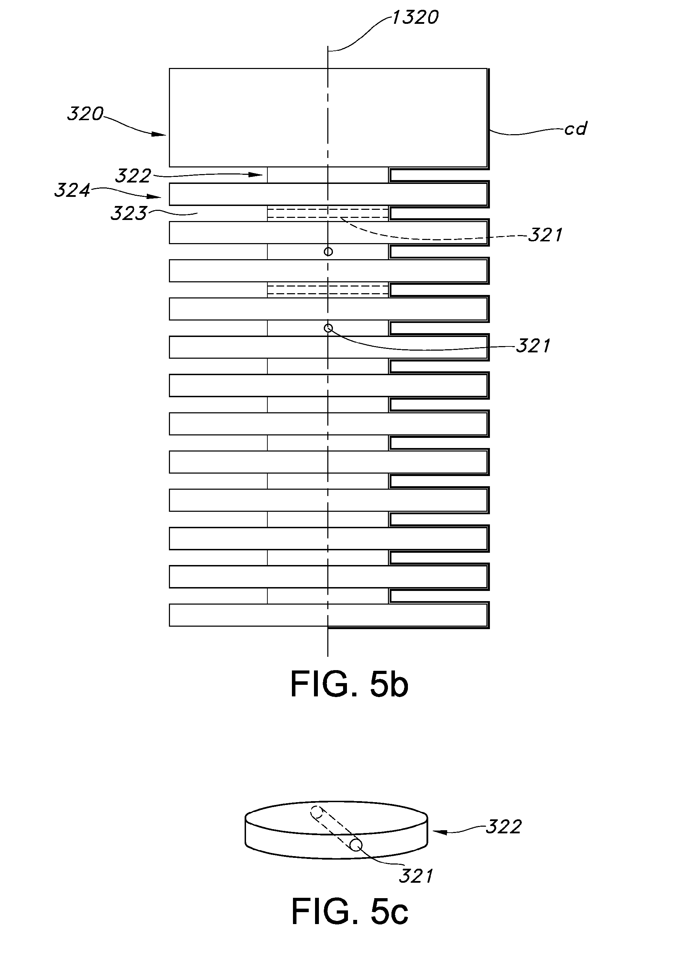

Fig. 5a-5c schematically depict embodiments and variations thereon of a possible isolator 320, such as a bushing. The isolator, such as a bushing, in figs. 5a-5b have creeping distances cd. The isolator, such as a bushing, comprises alternatingly arranged resided parts 322 and extended parts 324. In general, these are disk like structures, of disks having larger and smaller radii, especially all having a circle centre at a longitudinal axis 1320 of the isolator, such as a bushing. Between two adjacent extending parts, the resided part arranged in between those two adjacent extending parts results in a cavity between the two extending parts, as the residing part extends less than the extending parts. As within the cavity fouling may occur, one or more residing parts may comprise through holes 321 (see figs. 5b-5c). This may facilitate also gas flow through the cavities and thus reduction of fouling. These openings can be considered a kind of natural purge channels. One residing part may comprise one or more through channels which may optionally not be interconnected. The through holes in general have a longitudinal axis 1321are arranged in the plane of the residing part. Especially, the longitudinal axis 1321 of the through hole is preferably arranged perpendicular to the longitudinal axis 1320 of the isolator 320, such as isolator 320, such as a bushing,. One or more of the residing parts 322 may independently comprise one or more through holes 321. Figure 5b schematically depicts a variant with by way of example a few of residing disks 322 having through holes. However, also all residing disks 322 may have through holes, and the arrangement of the through holes 321 may be different from depicted in the schematic drawing 5b.

As described above, Figs. 3a-3c schematically depicted embodiments wherein an accommodation 50 is equipped with the gas purification system 10 of the invention. For instance, gas, such as air, from the accommodation may be exhausted from the accommodation 50 via the gas purification system. Purified gas 21 may then be exhausted (fig. 3a). However, the gas purification system 10 may also be applied to purify the gas 20 from the accommodation, and return purified gas 21 back into the accommodation 50.

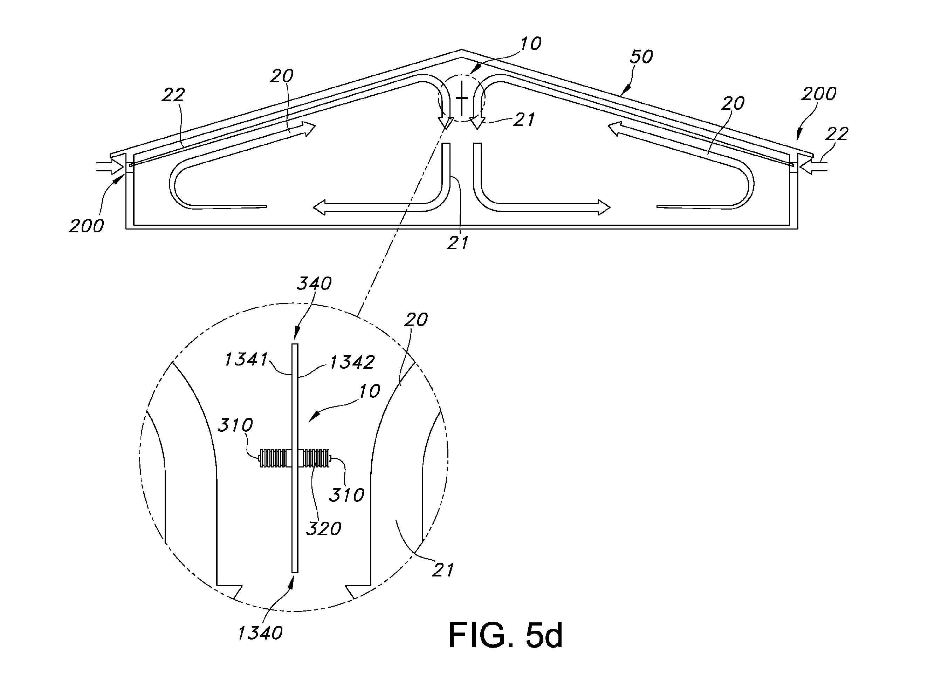

Figs. 5d-5f schematically depict embodiments of accommodation 50 including the gas purification system 10 for for instance cleaning air. Fig. 5d shows a further embodiment of an accommodation 50, which may be a garage, but which may also be a shed. Here, under the ridge of the roof, the gas purification system 10 is arranged. Due to natural convection, or due to ventilation, the gas within the accommodation passes along the gas purification system 10, and particles like dust, etc. may deposit at the counter electrode 340.

Note that in this example, again a gas purification system is applied with a counter electrode 340 between two electrodes 310. Here, the counter electrode 340 is again a plate 1340, with two (oppositely arranged) faces 1341 and 1342, respectively. Deposition will be formed at those faces during operation of the gas purification system 10. The electrodes 310 may each individually be corona discharge wires (or corona discharge wires).

Further, in this schematically depicted embodiment, optionally one or more gas transport units 200 may be applied. In this way, fresh air 22 may be introduced and a gas flow within the accommodation may be generated. The gas flow is indicated with the arrows.

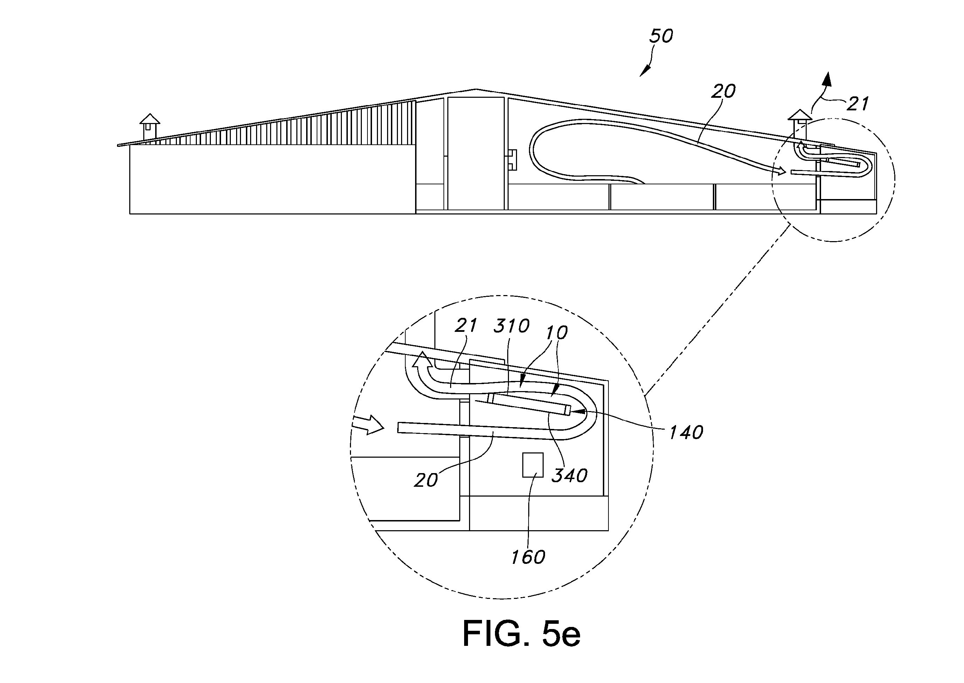

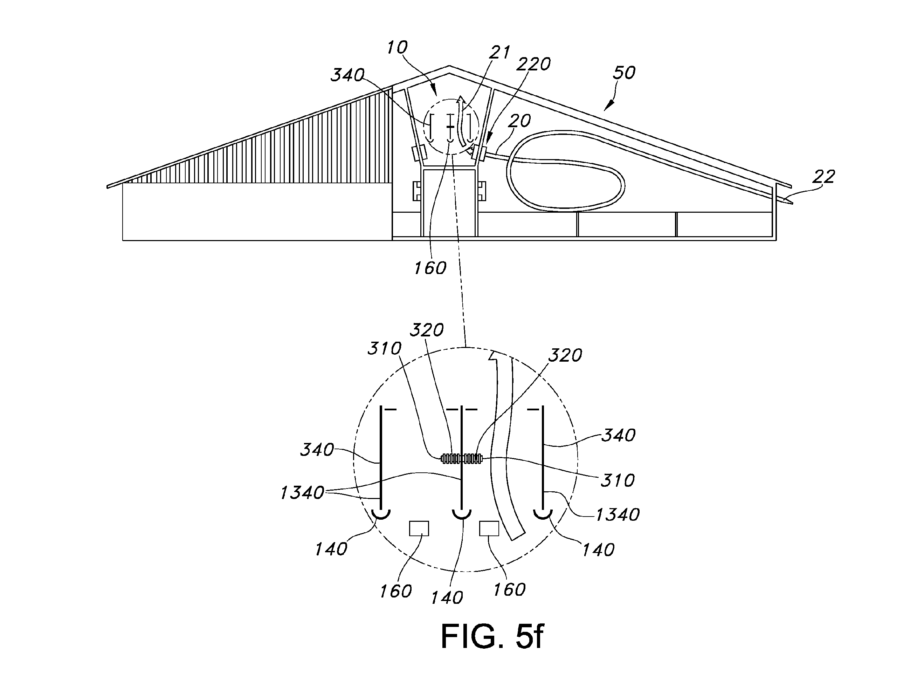

Figs. 5e and 5f schematically depict some further embodiments. Fig. 5e shows an embodiment wherein the gas purification system may be connected as unit to the accommodation 50, similar to the schematic drawing 5a. Fig. 5f is similar to fig 5d, however with some further variants. Here, additional counter electrodes 340 are arranged, sandwiching the centrally arranged combination of counter electrode 340 and corona discharge wires 310 at both sides of the centrally arranged counter electrode 340. Now, deposition may form at all three counter electrodes. In general, all counter electrodes have the same potential, during operation of the system, and are preferably grounded.

Both figures 5e and 5f further schematically depict a further variant, including an optional humidifier or liquid atomizer 160. Such optional humidifier or liquid atomizer 160, which may also be indicated as nebulizer, is configured to generate a haze of liquid droplets, especially a haze of an aqueous liquid. This may be used to scavenge (solve) possible gasses, especially ammonia in accommodations wherein animals reside. Due to the electrical field during operation of the gas purification system 10, droplets deposit at the counter electrode(s) 340. Hence, at a lower end of the counter electrode(s) 340, a means may be arranged to collect liquid, such as gutter(s) 140. Note that the liquid may contain also particles, such as dust particles.

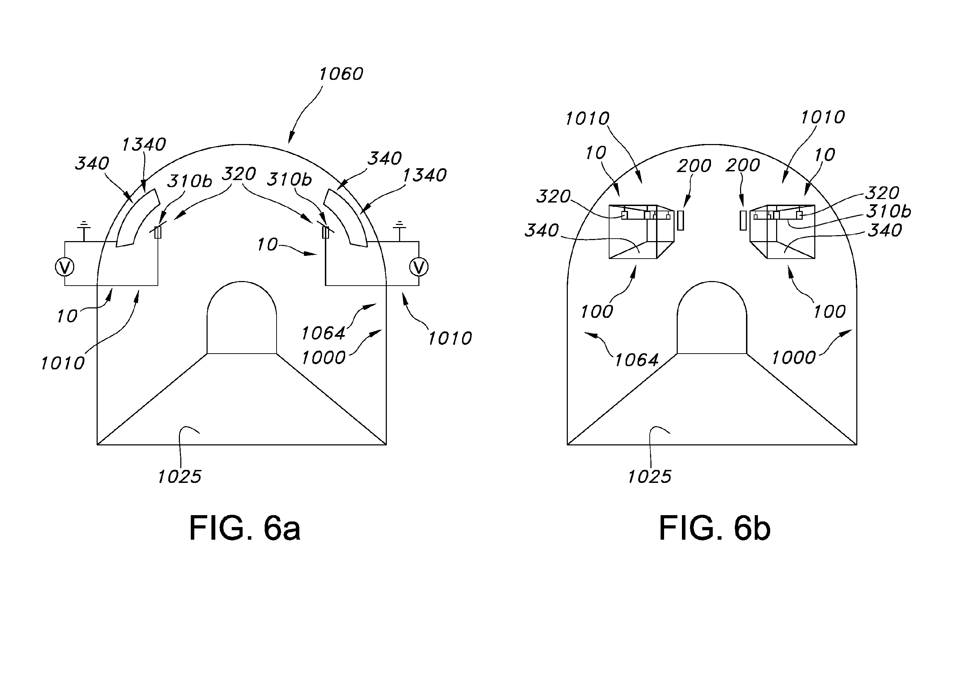

Figs 6a-6c schematically depict a particle catch arrangement 1010, comprising the gas purification system 10, wherein part of the gas purification system may be integrated in street furniture 1000. In those drawings, a tunnel 1060 with tunnel wall 1064 is shown, as well as a road 1025 through the tunnel 1060. For instance, the gas purification system 10, especially the counter electrode, may be attached to the tunnel wall 1064, see fig. 6a.

Fig. 6a schematically depicts a variant similar as schematically depicted in fig. 4a, i.e. the conductive strip 310 attached to the counter electrode 340 (but in electrical isolation thereof). Further, here in contrast to fig. 4a, the counter electrode 340 is curved (like fig. 2b). Fig. 6b schematically depicts an embodiment, wherein the unit as depicted in figs. 1a etc. are applied.

Fig. 6a schematically depicts an embodiment wherein the corona discharge wires 310, indicated with conductive wires 310b. are applied, with isolator 320, such as a bushing, as defined in one of the preferred embodiments. A11 embodiments described above may apply, but now wires are applied. The wire may consist of a material as indicated above, or may comprise tungsten. In the embodiment of fig. 6b, a systems as schematically e.g. depicted in fig. 1a is applied (with or optionally without gas transport unit 200).

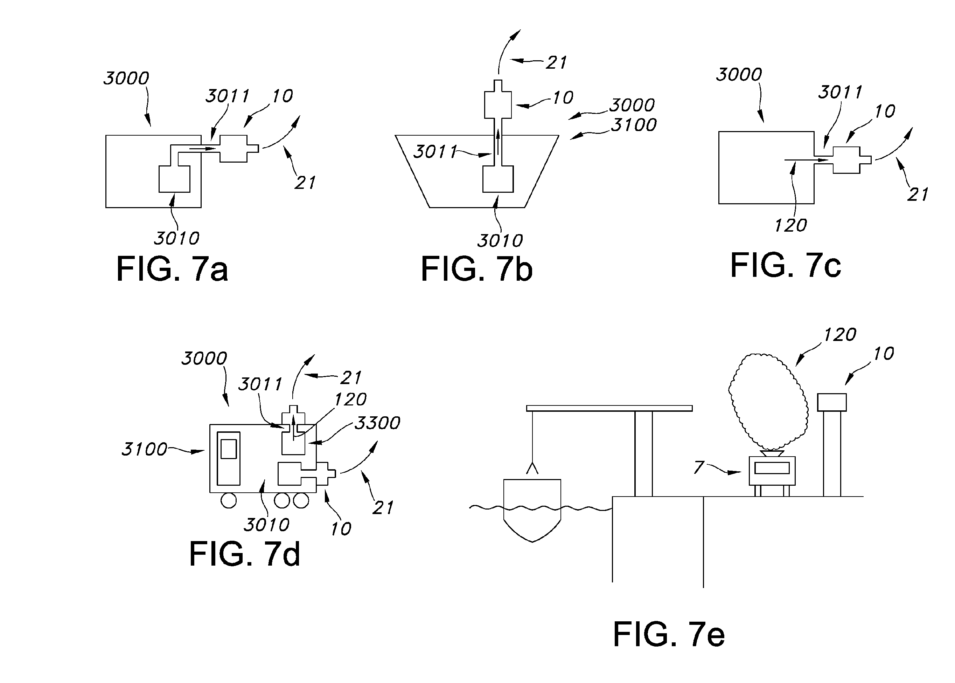

Figs. 7a-7e very schematically depict a non-limiting number of (further) applications. Reference 3000 indicates an application. This application may for instance be a mobile application 3100, such as schematically depicted in figs 7b (by way of example a ship) and 7c (by way of example a very schematically drawn street sweeper or road building vehicle for for instance application of asphalt). Figs. 7a, 7b and 7d schematically depict variants wherein the application comprises an engine 3010, especially a hydrocarbon based engine, which emits an exhaust gas, indicated with reference 3011. A downstream arranged gas purification system 10, configured to purify at least part of the exhaust gas of the engine 3011 is included in the application 3000. A purified gas 21 may be obtained. Figs. 7c, 7d and 7f schematically also show other applications, which by definition of their use may generate small particles. Fig. is a general picture, wherein the application 3000 may be any application, such as a street sweeper (see also fig 7d) or a transhipment site (see also fig. 7e) of bulk products like particulate bulk products such as maize, corn, fruit, nuts, potatoes, flour, sand, ore, vegetables, etc. etc. Fig. 7d thus shows an application wherein small particles may be generated due to an engine and/or due to its application, such a street sweeping, asphalt application, etc. Fig. 7e shows an embodiment of a transhipment site, where also small particles may be generated, indicated with reference 120, which may removed with the gas purification system 10. It is further referred to figs. 5a-5f, 6a-6c, 7a-7d for other applications, which can generally be symbolized by - amongst others - schematic drawings 7a and 7c.

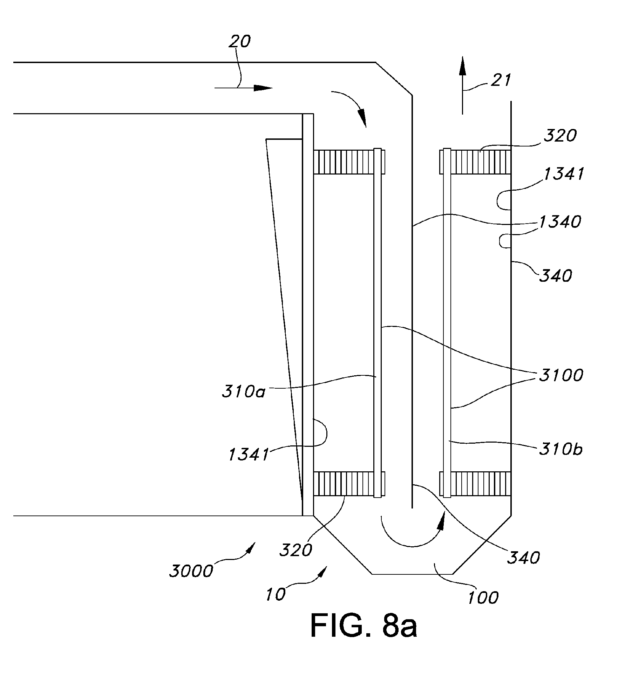

Fig. 8a schematically depicts a further application 3000. The gas purification system 10 is shown, which is configured to receive gas 20 that has to be purified. Gas 20 may for instance be gas generated by a street sweeper, especially the exhaust of a vacuum system of such street sweeper. Such application is configured to sweep the street, and material is removed from the street with the vacuum system. The vacuum system produce an (vacuum system) exhaust gas which contains fine dust, etc. The gas purification system 10 may reduce the amount of fine dust in said gas 20. In this embodiment of the gas purification system 10 - which is not especially limited to this application 3000, an elongated gas channel 100 is applied that is folded. This may save space, and nevertheless create a (long) elongated gas channel 100. The walls may comprise counter electrodes 340, and in this embodiment, part of the elongated gas channel 100 is at one side of one of the counter electrodes 340, and a downstream part of the elongated gas channel is at an opposite side of said one of the counter electrodes 340. Here, the counter electrode 340 in the middle is used to elongate the gas channel. In fact, this might be seen as a kind of (electrically conductive) baffle. In one part of the elongated gas channel 100 (at one side of the middle counter electrode), a first corona discharge wire 310a is arranged, and in other part of the elongated gas channel 100 (at the other side of the middle counter electrode), a second corona discharge wire 310b is arranged.

Hence, also in this embodiment, the gas purification system 10 comprises corona discharge wire(s) 310 (each), and (b) the counter electrode ("second electrode") 340. The gas purification system 10 further comprise (c) a voltage generator configured to apply a DC voltage of preferably at least 5 kV, especially at least 10 kV, to the corona discharge wire. This generator is not separately depicted in this and the further (and previous) schematic drawings.

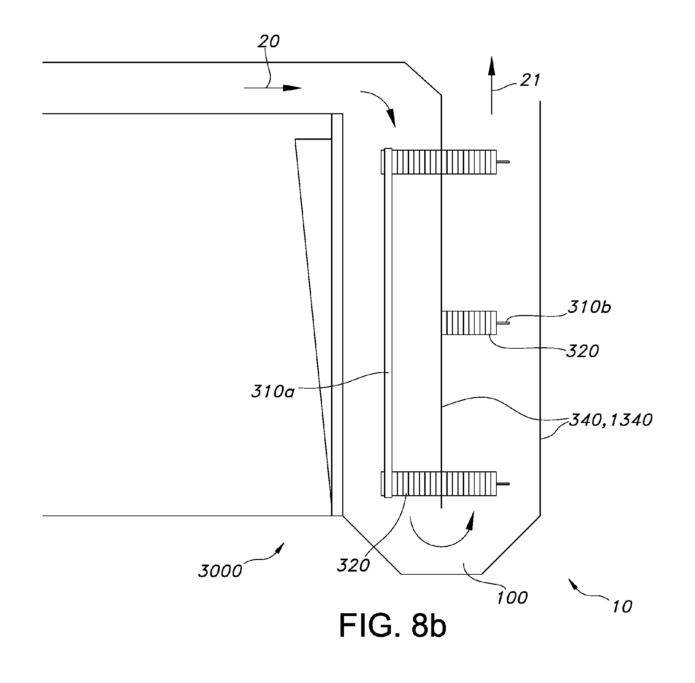

Fig. 8b schematically depicts a variant with respect to the embodiment schematically depicted in fig. 8a. One optional difference is the fact that the isolators, such as with corona discharge wires 310 are all attached to one counter electrode. Another optional variant is that the corona discharge wires, here first corona discharge wire 310a and second corona discharge wire 310b are arranged with respect to each other having an non-zero angle. In fig. 8a, the corona discharge wires are aligned parallel (with a mutual angle of 0°), whereas in fig. 8b they have a mutual angle of 80°. Two or more different arrangements of two or more corona discharge wires may especially be advantageous to reduce the fine dust content in the gas 20. The application 3000 may again be a street sweeper, though this configuration of the gas purification system 10 may also be applied for other purposes or in other applications.

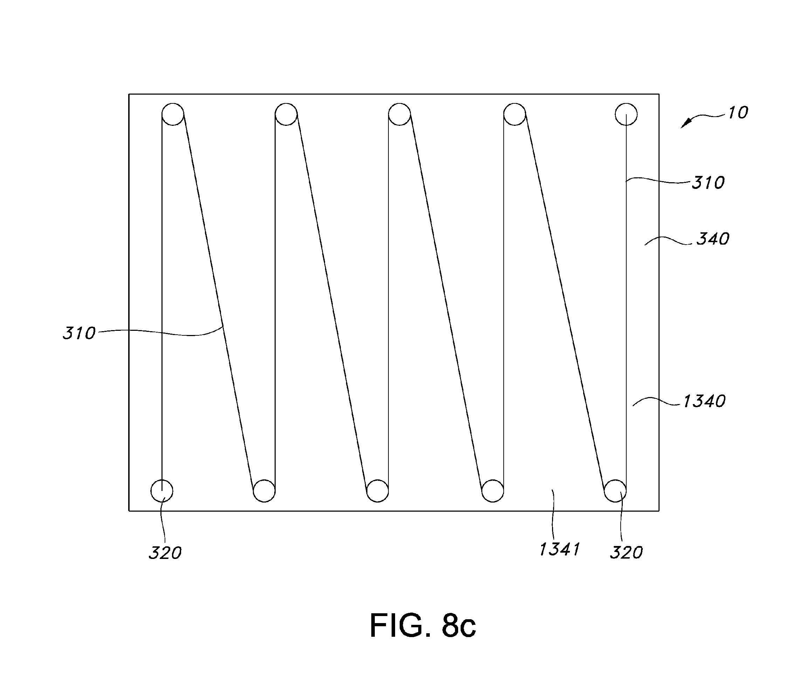

Fig. 8c schematically depicts a further embodiment, of an elongated arrangement of the corona discharge wire 310, which may be a folded long corona discharge wire or a plurality of corona discharge wires which are arranged head-tail and in electrical conductive arrangement with each other. Such arrangement may be applied in such street sweeper, but also in other applications described and/or depicted above.

The gas purification system may further comprise a control unit (not depicted), configured to control the corona discharge system, especially the voltage source, and the gas transport unit.

### Experimental

An apparatus was built as schematically depicted in figures 1c-2b. Air comprising fine dust and germs was fed through the elongated gas channel. A tungsten wire of 0.12 nm and a voltage of 20 kV were applied, with a corona discharge wire length of 7 m, a distance d1 of 225 mm, a distance d2 of 125 mm, a distance 12 of 175 mm, and a conveyor belt with a belt of stainless steel. Before and after purification, the particles can be measured with EPS or a dust track system. A substantial reduction was found.

Further, the following experiment was performed to find the optimum electrode and counter-electrode distance.

In a closed room a stainless steel collector plate (counter-electrode), such as depicted in fig. 4a, connect to ground, was mounted against the wall. On one side of this collector plate were two in length adjustable insulators with a corona wire in between mounted. The corona wire was connected to a 25 kV power supply. An ordinary smoke machine was used to create smoke/fine dust.

At an electrode and counter-electrode distance of 500 mm there was small movement of smoke particles visible towards the counter-electrode. Decreasing the distance to 400 mm resulted in a faster movement of smoke between the electrode and counter-electrode. At a distance of 300 mm smoke particles further away from the electrode started to move towards the counter-electrode. With decreasing the distance more smoke particles in the room were attracted and collected at the counter-electrode with a higher velocity. When the electrode and counter-electrode distance was adjusted to 125 mm the smoke particles 4-6 meter away from the electrode started to move rapidly towards the counter-electrode and was collected on the counter-electrode. When the distance between electrode and counter-electrode was set to 100 mm the smoke moved faster towards the counter-electrode but the range was less than 4-6 meters. With decreasing the distance the range of the electrode decreased rapidly and only the smoke within several decimetres was collected.

## Claims

1. A gas purification system (10) comprising a corona discharge system (300), the corona discharge system (300) comprising (a) a corona discharge wire (310), (b) a counter electrode (340), and (c) a voltage generator (330) configured to apply a DC voltage of at least 10 kV to the corona discharge wire (310).

2. The gas purification system (10) according to claim 1, comprising said corona discharge system (300), said corona discharge system (300) comprising (a) said corona discharge wire (310), having a thickness in the range of 0.05-2 mm, (b) said counter electrode (340), being earthed, wherein the counter electrode comprises an electrical conductive plate, and (c) said voltage generator (330) configured to apply a DC voltage of at least 10 kV to the corona discharge wire (310), and configured to generate a corona discharge at the corona discharge wire (310), wherein the corona discharge wire (310) is configured parallel to the counter electrode (340), wherein the corona discharge wire (310) has a second distance (d2) to the counter electrode (340) in the range of 7.5-35 cm.

3. The gas purification system according to any one of the preceding claims, wherein the corona discharge wire (310) comprises a plurality of corona discharge wires (310), and wherein at least a subset of the corona discharge wires (310) are configured parallel to the counter electrode (340) and parallel to each other, wherein the counter electrode comprises an electrical conductive plate.

4. The gas purification system according to any one of the preceding claims, wherein the corona discharge wire (310) comprises a plurality of corona discharge wires (310), and wherein at least a subset of the corona discharge wires (310) are configured parallel to the counter electrode (340) and are configured in a zigzag configuration, wherein said subset of the corona discharge wires (310 forms a single conductor, and wherein the counter electrode comprises an electrical conductive plate.

5. The gas purification system (10) according to any of the preceding claims, comprising an elongated gas channel (100), the elongated gas channel (100) comprising the counter electrode (340) and the corona discharge wire (310), the gas purification system (10) further comprising a gas transport unit (200), configured to transport gas (20) through the elongated gas channel (100).

6. The gas purification system (10) according to claim 5, wherein the elongated gas channel (100) has a first face (101), a second face (102) opposite of the first face (101), and edges (110), wherein the elongated gas channel (100) further has a rectangular cross-section (105), a channel height (h1), and a longitudinal axis (1); wherein the counter electrode (340) within the elongated gas channel (100) has a counter electrode distance (d3) to the first face (101), with ½h1<d3≤h1; wherein the corona discharge wire (310) within the elongated gas channel (100) has a first distance (d1) to the first face (101) and a second distance (d2), to the counter electrode (340), with ½h1<d1<h1 and d1/d2>1, wherein the corona discharge wire is configured parallel to the edges (110);

7. The gas purification system (10) according to any one of the preceding claims, comprising:
a. an elongated gas channel (100), having a first face (101), a second face (102) opposite of the first face (101), edges (110), wherein the elongated gas channel (100) further has a rectangular cross-section (105), a channel height (h1), and a longitudinal axis (1);
b. a gas transport unit (200), configured to transport gas (20) through the elongated gas channel (100);
c. a corona discharge system (300), comprising:
i. a counter electrode (340) within the elongated gas channel (100), having a counter electrode distance (d3) to the first face (101), with ½h1<d3<h1;
ii. a corona discharge wire (310) within the elongated gas channel (100), having a first distance (d1) to the first face (101) and a second distance (d2) to the counter electrode (340), with ½h1<d1<h1 and d1/d2>1, wherein the corona discharge wire is configured parallel to the first face (101), the second face (102), and the edges (110);
iii. a voltage generator (330) configured to apply a DC voltage of at least 10 kV to the corona discharge wire (310); and
wherein distances from the corona discharge wire (310) to each of the first face (101) and the edges (110) are larger than the second distance (d2) to the counter electrode (340).

8. The gas purification system (10) according to any one of the preceding claims, wherein the counter electrode (340) is part of a belt (401) of a conveyor belt (400), wherein the conveyor belt (400) is configured to run the belt (401) through the elongated gas channel (100).

9. The gas purification system (10) according to any one of the preceding claims, wherein the counter electrode (340) comprises a concave part (341), wherein the counter electrode (340) is earthed, wherein the corona discharge wire (310) has a thickness in the range of 0.05-2 mm, wherein the gas purification system (10) comprising an arrangement of a plate like counter electrode (340) and the corona discharge wire (310) attached to the plate like counter electrode (340) with one or more isolators (320) in between, wherein each isolator (320) has a creeping length (cd), wherein the creeping length (cd) is configured to be at least 5 mm creeping length (cd) per kV DC voltage, especially at least 10 mm creeping length (cd) per kV DC voltage.

10. The gas purification system (10) according to any one of the preceding claims, wherein, further comprising a gas return system (15), configured to recirculate at least part of the gas through the gas transport unit (200).

11. A motorized vehicle, comprising the gas purification system (10) according to any one of claims 1-10, configured to purify an exhaust gas of the motorized vehicle, especially a street sweeper comprising the gas purification system according to any one of claims 1-10, configured to purify the exhaust gas of a vacuum system of the street sweeper.

12. An accommodation (50), selected from the group consisting of a shed, a stable, a sty, a fold and a poultry farm, further comprising the gas purification system (10) according to any one of claims 1-10 for purifying the air from the accommodation.

13. Use of the gas purification system according to any one of claims 1-10, for one or more of (i) cleaning air from an accommodation (50), selected from the group consisting of a shed, a stable, a sty, a fold and a poultry farm, (ii) for the removal of fine dust from a gas, (iii) for the removal of bacteria, viruses, spores, fungi and parasites, especially bacteria, viruses and fungi, from a gas, and (iv) for the removal of ammonia (NH₃) from a gas.

14. A method for purifying air comprising leading air through the gas purification system according to any one of claims 1-10 while applying a DC voltage of at least 10 kV to the corona discharge wire (310).

15. The method according to claim 14, for purifying air from an accommodation (50), selected from the group consisting of a shed, a stable, a sty, a fold and a poultry farm, comprising leading gas from the accommodation through the gas purification system according to any one of claims 1-10 while applying a DC voltage of at least 10 kV to the corona discharge wire (310).

16. The method according to any one of claims 14-15, comprising applying a DC voltage of at least 20 kV to the corona discharge wire (310), wherein the discharge wire (310) is configured as positive electrode and wherein the counter electrode (340) is earthed, and wherein the method further comprises applying an electric current of at least 100 µA per meter corona discharge wire (310), and applying a stationary electric field between the corona discharge wire (310) and the counter electrode (340) in the range of 2-100 kV/m.
